(19) **Europäisches Patentamt / European Patent Office / Office européen des brevets**

(11) **EP 4 225 089 B1**

(12) **EUROPEAN PATENT SPECIFICATION**

(45) Date of publication and mention
of the grant of the patent:
**21.05.2025 Bulletin 2025/21**

(21) Application number: **21915576.9**

(22) Date of filing: **06.12.2021**

(51) International Patent Classification (IPC):
*A24F 40/50* (2020.01)      *A24F 40/465* (2006.01)
*H05B 6/36* (2006.01)       *H05B 6/10* (2006.01)
*H02J 7/00* (2006.01)       *A24F 40/51* (2020.01)
*A24F 40/57* (2020.01)      *A24F 40/60* (2020.01)
*A24F 40/65* (2020.01)

(52) Cooperative Patent Classification (CPC):
**H05B 6/06; A24F 40/46; A24F 40/50; A24F 40/51;
H02J 7/0063; H02J 7/0071; H05B 6/108;**
A24F 40/20; H02J 7/007192

(86) International application number:
**PCT/KR2021/018324**

(87) International publication number:
**WO 2022/145778 (07.07.2022 Gazette 2022/27)**

## (54) AEROSOL GENERATING DEVICE AND OPERATING METHOD THEREOF

AEROSOLERZEUGUNGSVORRICHTUNG UND BETRIEBSVERFAHREN DAFÜR

DISPOSITIF DE GÉNÉRATION D'AÉROSOL ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2020 KR 20200189477**

(43) Date of publication of application:
**16.08.2023 Bulletin 2023/33**

(73) Proprietor: **KT&G Corporation
Daedeok-gu
Daejeon 34337 (KR)**

(72) Inventors:
• **KIM, Yong Hwan
Anyang-si, Gyeonggi-do 13970 (KR)**
• **YOON, Sung Wook
Suwon-si, Gyeonggi-do 16534 (KR)**
• **LEE, Seung Won
Gwangmyeong-si, Gyeonggi-do 14293 (KR)**
• **JANG, Seok Su
Daedeok-gu 34337 (KR)**
• **HAN, Dae Nam
Seoul 06344 (KR)**

(74) Representative: **Ter Meer Steinmeister & Partner
Patentanwälte mbB
Nymphenburger Straße 4
80335 München (DE)**

(56) References cited:
EP-A1- 3 613 302          WO-A1-2016/005601
WO-A1-2018/055558      WO-A1-2018/202727
WO-A1-2020/122408      US-A1- 2017 143 042
US-A1- 2018 093 054

# Description

[Technical Field]

The present disclosure relates to an aerosol generating device and an operating method thereof.

[Background Art]

Recently, the demand for alternative methods to overcome the shortcomings of general cigarettes has increased. For example, there is growing demand for an aerosol generating device that generates an aerosol by heating an aerosol generating material contained in an aerosol generating article (e.g., cigarette) without combustion. Accordingly, studies on a heating-type aerosol generating device have been actively conducted.

US 2017/143042 A1 relates to an aerosol-generating system comprising a removable heater. The data storage device on the heater may comprise a unique data set that can be used by the aerosol-generating device to identify and distinguish between different heaters. The aerosol-generating device may be configured to function with two or more different types of aerosol-forming cartridge each comprising a different aerosol-forming substrate requiring a different heating profile. The aerosol-generating device may comprise a USB plug or a USB socket to allow connection of the aerosol-generating device to another USB enabled device and to support the transfer of data to the device, such as new heating profiles for new or updated aerosol-forming cartridges.

WO 2018/202727 A1 relates to a removable heater assembly for an aerosol-generating device, the removable heater assembly for heating a tobacco plug and comprising an electrical heater, a data storage device, and data stored on the data storage device, the data comprising calibration data for the electrical heater. The calibration data may account for differences between heater assemblies due to manufacturing tolerances and represents a voltage-temperature profile for the electrical heater

US 2018/093054 A1 relates to an electronic vaporizing device which includes a removable cartridge that includes a heater.

WO 2020/122408 A1 relates to an aerosol-generating device of the technological background to the present invention.

[Disclosure]

[Technical Probleml

An aerosol generating device is manufactured as an integrated body in which all components are combined. When an integrated aerosol generating device malfunctions, even if the erroneous component is replaced, a smoking impression may change because there may exist slight differences among the manufactured products. Therefore, even when only one component malfunctions, a user may have to purchase the entire device.

[Technical Solution]

According to a first embodiment of the present invention an aerosol generating device is described in claim 1.

According to a second embodiment of the present invention an aerosol generating device is described in claim 11.

According to another aspect of the present invention an aerosol generating device is described in claim 13.

**Advantageous Effects of Invention**

According to the aforementioned description, an aerosol generating device may be repaired by simply replacing the defective component thereof. In addition, the aerosol generating device may perform a uniform heating operation even when the component is replaced. Furthermore, the aerosol generating device may accurately measure a temperature of a heater without additional calibration using an external measuring device.

The effects of embodiments are not limited to the aforementioned description, and effects that are not mentioned will be clearly understood by those of ordinary skill in the art from the present specification and the accompanying drawings.

**Brief Description of Drawings**

FIGS. 1A to 1D are diagrams illustrating various types of aerosol generating devices in which a removable heater module is combined to a main body, according to an embodiment;

FIG. 2 is a conceptual view illustrating an aerosol generating device having a replaceable removable heater module, according to an embodiment;

FIG. 3 is a block diagram illustrating hardware components of an aerosol generating device according to an embodiment;

FIG. 4A is a diagram illustrating a method of controlling an aerosol generating device by using a new heater parameter when a removable heater module is replaced, according to an embodiment;

FIG. 4B is a graph for comparing a case where a controller uses a heater parameter before replacement with a case where the controller uses a heater parameter of a new removable heater module, according to an embodiment;

FIG. 5A is a diagram illustrating a method of controlling an aerosol generating device by using a new heater parameter when a removable heater module is replaced, according to another embodiment;

FIG. 5B is a graph for comparing a case where a controller uses a heater parameter before replacement with a case where the controller uses a heater parameter of a new removable heater module when a removable heater module is replaced, according to another embodiment;

FIG. 6 is a diagram illustrating a method of determining a frequency to be applied to a heater by using a heater parameter, according to an embodiment;

FIG. 7 is a flowchart illustrating a method of applying a voltage to a heater by using a heater parameter, according to an embodiment;

FIG. 8 is a diagram intuitively illustrating a difference between a temperature of a heater measured by a temperature sensor and an actual temperature of the heater, according to an embodiment;

FIG. 9 is a diagram illustrating a method of determining a calibration temperature by using a polynomial calculated based on a rate of change of a temperature measured by a temperature sensor, according to an embodiment;

FIG. 10 is a diagram schematically illustrating a graph of a calibration temperature and an actual temperature of a heater according to an embodiment;

FIG. 11 is a flowchart illustrating a method of determining a calibration temperature by using a temperature sensor parameter, according to an embodiment;

FIG. 12 is a diagram illustrating a structure in which a removable heater module and a main body are combined to each other, according to an embodiment;

FIG. 13 is a block diagram illustrating an aerosol generating device according to another embodiment;

FIG. 14 is a flowchart illustrating a method of obtaining heater module information, according to another embodiment; and

FIG. 15 is a flowchart illustrating an operating method of an aerosol generating device, according to an embodiment.

**Best Mode for Carrying out the Invention**

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, embodiments of the present disclosure will be described in detail with reference to the drawings.

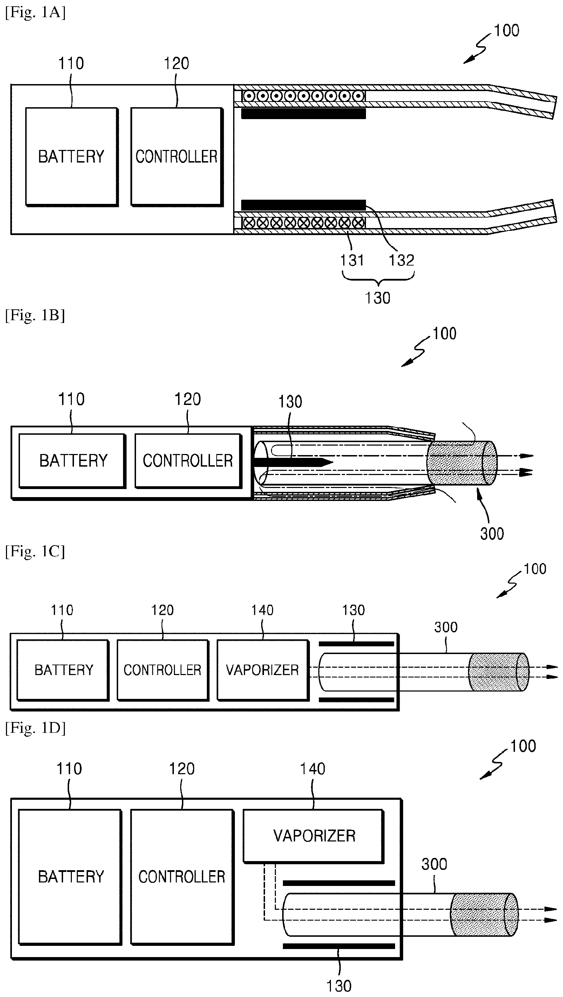

FIGS. 1A to 1D are diagrams illustrating various types of aerosol generating devices in which a removable heater module is combined to a main body, according to an embodiment.

The aerosol generating device 100 may include a heater 130 which is an induction heater. In detail, the heater 130 of FIG. 1A may include a coil 131 and a susceptor 132, which heat an aerosol generating article by an induction heating method. The aerosol generating device 100 may generate an aerosol by heating an aerosol generating article accommodated in the aerosol generating device 100 by an induction heating method. The induction heating method may refer to a method of heating a magnetic body by applying an alternating magnetic field having a periodically changing direction to the magnetic body.

The aerosol generating device 100 may release heat energy from a magnetic body by applying an alternating magnetic field to the magnetic body, and may heat an aerosol generating article by transferring the heat energy released from the magnetic body to the aerosol generating article. In FIG. 1A, the magnetic body generating heat according to the external magnetic field may be the susceptor 132. In another example, the susceptor 132 may be included in an aerosol generating article in the shape of a piece, a flake, a strip, etc.

The aerosol generating device 100 may accommodate an aerosol generating article. A space for accommodating an aerosol generating article may be formed in the aerosol generating device 100. The susceptor 132 may be arranged around the space for accommodating an aerosol generating article. For example, the susceptor 132 may have a cylindrical shape. Accordingly, when an aerosol generating article is accommodated in the accommodation space, and the susceptor 132 may surround at least a portion of an outer side surface of the aerosol generating article. However, the shape of the susceptor 132 is not limited thereto, and may have various shapes. For example, the susceptor 132 may have the shape of a needle such that the susceptor 132 is inserted into an aerosol generating article.

The coil 131 may be wound along an outer side surface of the susceptor 132, and may apply an alternating magnetic field to the susceptor 132. When power is supplied to the coil 131 from the aerosol generating device 100, a magnetic field may be formed in an inner region of the coil 131. When an alternating current or alternating current voltage is applied to the coil 131, an alternating magnetic field may be formed inside the coil 131. When the susceptor 132 is located inside the coil 131 and is exposed to an alternating magnetic field, the susceptor 132 may generate heat, and an aerosol generating article accommodated in the susceptor 132 may be heated.

A battery 110 may supply power to the aerosol generating device 100, for example, to the coil 131 for a heating operation of the heater 130.

A controller 120 may control the heating operation of the heater 130 by controlling a voltage or current supplied to the coil 131. For example, the controller 120 may control the heating operation of the heater 130 to maintain a constant temperature at which an aerosol generating article is heated by the susceptor 132.

Referring to FIG. 1B, the aerosol generating device 100 may include a battery 110, a controller 120, and a heater 130.

Referring to FIGS. 1C and 1D, the aerosol generating device 100 may further include a vaporizer 140. Also, the aerosol generating article 300 may be inserted into an inner space of the aerosol generating device 100.

FIGS. 1A through 1D illustrate components of the aerosol generating device 100, which are related to the present embodiment. Therefore, it will be understood by one of ordinary skill in the art related to the present embodiment that other general-purpose components may be further included in the aerosol generating device 100, in addition to the components illustrated in FIGS. 1A through 1D.

FIGS. 1A and 1B illustrate that the battery 110, the controller 120, and the heater 130 are arranged in series. Also, FIG. 1C illustrates that the battery 110, the controller 120, the vaporizer 140, and the heater 130 are arranged in series. Also, FIG. 1D illustrates that the vaporizer 140 and the heater 130 are arranged in parallel. However, the internal structure of the aerosol generating device 100 is not limited to the structures illustrated in FIGS. 1A through 1D. In other words, according to the design of the aerosol generating device 100, the battery 110, the controller 120, the heater 130, and the vaporizer 140 may be differently arranged.

When the aerosol generating article 300 is inserted into the aerosol generating device 100, the aerosol generating device 100 may operate the heater 130 and/or the vaporizer 140 to generate aerosol from the aerosol generating article 300 and/or the vaporizer 140. The aerosol generated by the heater 130 and/or the vaporizer 140 is delivered to a user by passing through the aerosol generating article 300.

As necessary, even when the aerosol generating article 300 is not inserted into the aerosol generating device 100, the aerosol generating device 100 may heat the heater 130.

The battery 110 may supply power to be used for the aerosol generating device 100 to operate. For example, the battery 110 may supply power to heat the heater 130 or the vaporizer 140, and may supply power for operating the controller 120. Also, the battery 110 may supply power for operations of a display, a sensor, a motor, etc. mounted in the aerosol generating device 100.

The controller 120 may generally control operations of the aerosol generating device 100. In detail, the controller 120 may control not only operations of the battery 110, the heater 130, and the vaporizer 140, but also operations of other components included in the aerosol generating device 100. Also, the controller 120 may check a state of each of the components of the aerosol generating device 100 to determine whether or not the aerosol generating device 100 is able to operate.

The controller 120 may include at least one processor. A processor can be implemented as an array of a plurality of logic gates or can be implemented as a combination of a general-purpose microprocessor and a memory in which a program executable in the microprocessor is stored. It will be understood by one of ordinary skill in the art that the processor can be implemented in other forms of hardware.

The heater 130 may be heated by the power supplied from the battery 110. For example, when the aerosol generating article 300 is inserted into the aerosol generating device 100, the heater 130 may be located outside the aerosol generating article 300. Thus, the heated heater 130 may increase a temperature of an aerosol generating material in the aerosol generating article 300.

The heater 130 may include an electro-resistive heater. For example, the heater 130 may include an electrically conductive track, and the heater 130 may be heated when currents flow through the electrically conductive track. However, the heater 130 is not limited to the example described above and may include all heaters which may be heated to a desired temperature. Here, the desired temperature may be pre-set in the aerosol generating device 100 or may be set by a user.

For example, the heater 130 may include a tube-type heating element, a plate-type heating element, a needle-type heating element, or a rod-type heating element, and may heat the inside or the outside of the aerosol generating article 300, according to the shape of the heating element.

Also, the aerosol generating device 100 may include a plurality of heaters 130. Here, the plurality of heaters 130 may be inserted into the aerosol generating article 300 or may be arranged outside the aerosol generating article 300. Also, some of the plurality of heaters 130 may be inserted into the aerosol generating article 300 and the others may be arranged outside the aerosol generating article 300. In addition, the shape of the heater 130 is not limited to the shapes illustrated in FIGS. 1A through 1D and may include various shapes.

The vaporizer 140 may generate aerosol by heating a liquid composition and the generated aerosol may pass through the aerosol generating article 300 to be delivered to a user. In other words, the aerosol generated via the vaporizer 140 may move along an air flow passage of the aerosol generating device 100 and the air flow passage may be configured such that the aerosol generated via the vaporizer 140 passes through the aerosol generating article 300 to be delivered to the user.

For example, the vaporizer 140 may include a liquid storage, a liquid delivery element, and a heating element, but it is not limited thereto. For example, the liquid storage, the liquid delivery element, and the heating element may be included in the aerosol generating device 100 as independent modules.

The liquid storage may store a liquid composition. For example, the liquid composition may be a liquid including a tobacco-containing material having a volatile tobacco flavor component, or a liquid including a non-tobacco material. The liquid storage may be formed to be detachable from the vaporizer 140 or may be formed integrally with the vaporizer 140.

For example, the liquid composition may include water, a solvent, ethanol, plant extract, spices, flavorings, or a vitamin mixture. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, and vitamin E, but are not limited thereto. Also, the liquid composition may include an aerosol forming substance, such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element is an element for heating the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosol may be generated.

For example, the vaporizer 140 may be referred to as a cartomizer or an atomizer, but it is not limited thereto.

The aerosol generating device 100 may further include general-purpose components in addition to the battery 110, the controller 120, the heater 130, and the vaporizer 140. For example, the aerosol generating device 100 may include a display capable of outputting visual information and/or a motor for outputting haptic information. Also, the aerosol generating device 100 may include at least one sensor (a puff sensor, a temperature sensor, an aerosol generating article insertion detecting sensor, etc.). Also, the aerosol generating device 100 may be formed as a structure that, even when the aerosol generating article 300 is inserted into the aerosol generating device 100, may introduce external air or discharge internal air.

Although not illustrated in FIGS. 1A through 1D, the aerosol generating device 100 and an additional cradle may form together a system. For example, the cradle may be used to charge the battery 110 of the aerosol generating device 100. Alternatively, the heater 130 may be heated when the cradle and the aerosol generating device 100 are coupled to each other.

The aerosol generating article 300 may be similar to a general combustive cigarette. For example, the aerosol generating article 300 may be divided into a first portion including an aerosol generating material and a second portion including a filter, etc. Alternatively, the second portion of the aerosol generating article 300 may also include an aerosol generating material. For example, an aerosol generating material made in the form of granules or capsules may be inserted into the second portion.

The entire first portion may be inserted into the aerosol generating device 100, and the second portion may be exposed to the outside. Alternatively, only a portion of the first portion may be inserted into the aerosol generating device 100, or the entire first portion and a portion of the second portion may be inserted into the aerosol generating device 100. The user may puff aerosol while holding the second portion by the mouth of the user. In this case, the aerosol is generated by the external air passing through the first portion, and the generated aerosol passes through the second portion and is delivered to the user's mouth.

For example, the external air may flow into at least one air passage formed in the aerosol generating device 100. For example, opening and closing of the air passage and/or a size of the air passage formed in the aerosol generating device 100 may be adjusted by the user. Accordingly, the amount and the quality of smoking may be adjusted by the user. As another example, the external air may flow into the aerosol generating article 300 through at least one hole formed in a surface of the aerosol generating article 300.

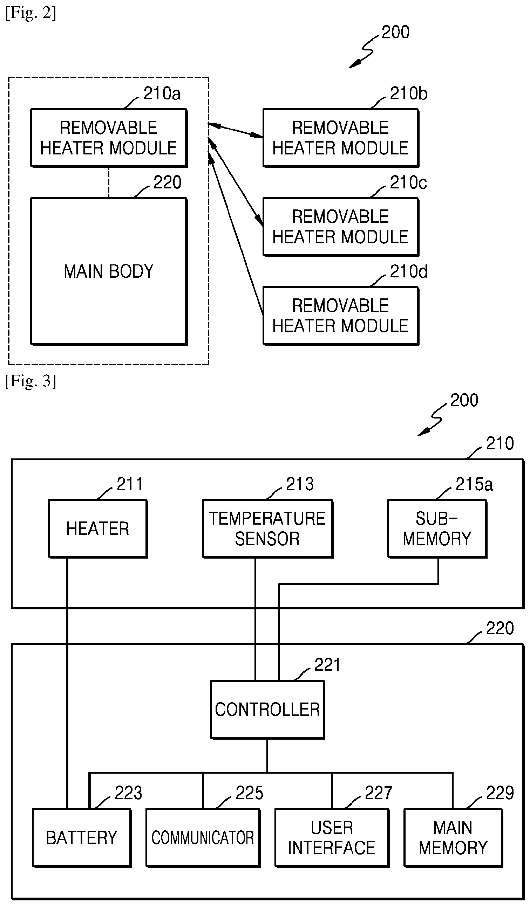

Hereinbefore, various types of aerosol generating devices in which a removable heater module and a main body are combined to each other have been described with reference to FIGS. 1A to 1D. Hereinafter, an aerosol generating device having a replaceable removable heater module will be described with reference to FIG. 2.

FIG. 2 is a conceptual view illustrating an aerosol generating device 200 having a replaceable removable heater module, according to an embodiment. The aerosol generating device 200 of FIG. 2 may be a device corresponding to the aerosol generating device 100 described above with reference to FIGS. 1A to 1D.

Referring to FIG. 2, the aerosol generating device 200 may include a removable heater module 210a and a main body 220.

A general aerosol generating device is manufactured as an integrated body in which all components are combined in an inseparable manner, and is provided to a user. An integrated aerosol generating device needs to provide the same smoking impression to multiple users. However, even when the same components are used to manufacture the integrated aerosol generating device, slight errors may occur in manufacturing and assembling stages of each component, which leads to a non-uniform smoking impression. Accordingly, in order to correct slight errors, an additional calibration procedure is performed on the integrated aerosol generating device before release by a manufacturer, such that the finished products perform a same operation or a uniform operation with a deviation within a certain range.

Therefore, even if only one component of the purchased aerosol generating device malfunctions, a user may have to get a new integrated aerosol generating device in which slight errors are calibrated in advance, instead of only replacing the malfunctioning component.

In the aerosol generating device 200 of the present disclosure, even when the removable heater module 210a malfunctions, the removable heater module 210a may be simply replaced with one of other removable heater modules 210b, 210c, and 210d of a same type. Furthermore, when one of the removable heater modules 210b, 210c, and 210d of the same type is combined to the main body 220, even though the removable heater modules 210b, 210c, and 210d have different intrinsic properties, the main body 220 may control the removable heater modules 210b, 210c, and 210d to perform a uniform heating operation.

The removable heater modules 210a, 210b, 210c, and 210d may include various elements, such as a heater, a temperature sensor, etc. Depending on manufacturing methods and materials of the elements and an interaction according to a combination of the elements, the removable heater modules 210a, 210b, 210c, and 210d may have different information about properties of the elements. Hereinafter, such information about the elements included in the removable heater modules 210a, 210b, 210c, and 210d may be referred to as heater module information.

The removable heater modules 210a, 210b, 210c, and 210d may respectively store heater module information. For example, the heater module information may be obtained and stored in each of the removable heater modules 210a, 210b, 210c, and 210d during the manufacturing process of the removable heater modules 210a, 210b, 210c, and 210d.

The main body 220 may control the aerosol generating device 200 by using the heater module information of the removable heater modules 210a, 210b, 210c, and 210d. For example, regardless of which one of the removable heater modules 210a, 210b, 210c, and 210d is combined to the main body 220, the aerosol generating device 200 may control a heater to perform a uniform heating operation according to a preset temperature profile.

Hereinafter, a method of controlling the aerosol generating device 200 to perform a uniform heating operation by using the heater module information will be described with reference to FIGS. 3 to 13.

FIG. 3 is a block diagram illustrating hardware components of the aerosol generating device 200 according to an embodiment. A heater 211, a controller 221, and a battery 223 of FIG. 3 may correspond to the heater 130, the controller 120, and the battery 110 of FIGS. 1A to 1D, respectively, and may perform the same functions described above with reference to FIGS. 1A to 1D.

Referring to FIG. 3, the aerosol generating device 200 may include a main body 220 and a removable heater module 210, which is removably combined to the main body 220. The removable heater module 210 may include the heater 211, a temperature sensor 213, and a sub-memory 215a. The main body 220 may include the controller 221, the battery 223, a communicator 225, a user interface 227, and a main memory 229. However, hardware components inside the aerosol generating apparatus 200 are not limited to those illustrated in FIG. 3. It will be understood by one of ordinary skill in the art that, according to a design of the aerosol generating device 200, some of the hardware components shown in FIG. 3 may be omitted or new components may be added.

The temperature sensor 213 may measure a temperature of the heater 211. For example, the temperature sensor 213 may measure the temperature of the heater 211 when the heater 211 performs a heating operation.

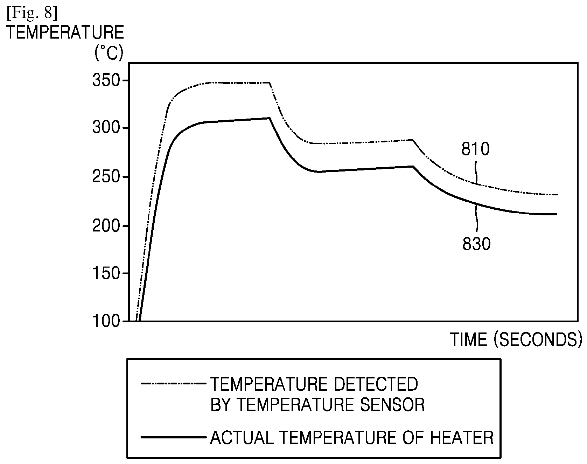

The temperature sensor 213 may provide a measurement value to the controller 221. The controller 221 may determine a calibration temperature which is finally used in control of the aerosol generating device 200, by using the measurement value of the temperature sensor 213. In other words, the controller 221 may control the heating operation of the heater 211 by recognizing the calibration temperature as an actual temperature of the heater 211. The calibration temperature may be variously used in subsequent control of the aerosol generating device 200. For example, by using the calibration temperature, the controller 221 may monitor whether the heater 211 performs a normal heating operation according to a preset temperature profile, stop a heating operation based on a monitoring result, adjust a voltage applied to the heater 211, or provide information about an abnormal operation to a user. A method of determining the calibration temperature will be described in detail later with reference to FIGS. 8 to 11.

The sub-memory 215a may store heater module information. When the removable heater module 210 is combined to the main body 220, the sub-memory 215a may provide the stored heater module information to the controller 221 via an electrical connection with the controller 221.

The sub-memory 215a may be a non-volatile memory capable of storing heater module information even when the removable heater module 210 is not combined to the main body 220. Types of the non-volatile memory are not limited. For example, the non-volatile memory may be implemented as various types of memories, such as read-only memory (ROM), programmable read-only memory (PROM), erasable programmable read-only memory (EPRROM), electrically erasable programmable read-only memory (EEPROM), flash memory, ferroelectric random access memory (FRAM), magnetoresistive random-access memory (MRAM), phase-change memory (PRAM), and resistive random-access memory (RRAM).

The heater module information stored in the sub-memory 215a may be information about intrinsic properties of elements included in the removable heater module 210. For example, the heater module information may include a heater parameter related to intrinsic properties of the heater 211, or a temperature sensor parameter related to intrinsic properties of the temperature sensor 213.

The heater parameter may be a parameter for determining a voltage applied to the heater 211, and the temperature sensor parameter may be a parameter for compensating a measurement value of the temperature sensor 213 such that the measurement value may be trusted as an actual temperature of the heater 211.

The heater parameter may include parameters related to intrinsic properties of the heater 211 which affect a heating operation of the heater 211. For example, the heater parameter may include a resistance value of the heater 211, an inductance value of the heater 211, a capacitance value of the heater 211, a resonance frequency value of the heater 211 when the heater 211 is an induction heater (e.g., 130 of FIG. 1A), and a voltage level over time required for the heater 211 to perform a uniform heating operation. The capacitance value may be a value of a capacitor provided in the removable heater module 210 and electrically connected to the heater 211.

The number and the arrangement of capacitors electrically connected to the heater 211 are not limited. For example, a capacitor may be arranged in the removable heater module 210, in the main body 220, or in both the removable heater module 210 and the main body 220, or may be omitted depending on the design.

The temperature sensor parameter may include parameters related to intrinsic properties of the temperature sensor 213 which affect determination of the calibration temperature. For example, the temperature sensor parameter may include measurement values of a temperature of the heater 211 measured by the temperature sensor 213, actual temperatures of the heater 211 which respectively correspond to the measurement values, a relationship between the measurement values and the actual temperatures, and a polynomial formulating the relationship between the actual temperature and the measurement value. The actual temperature may be a temperature of the heater 211 measured by using an independent infrared radiation (IR) measuring device.

The heater module information may be obtained in advance by an external measuring device during a manufacturing process of the removable heater module 210 and stored in the sub-memory 215a. For example, a resistance value and/or inductance value of the heater 211 may be measured by the external measuring device.

The resistance value and/or inductance value of the heater 211 may have a slight deviation depending on a material, a manufacturing method, etc. during a manufacturing process of the heater 211. An accurate resistance value and/or accurate inductance value of each heater 211 may be measured by the external measuring device during the manufacturing process of the removable heater module 210. As the accurate resistance value and/or inductance value of each heater 211 is stored in the sub-memory 215a, even though the resistance value and/or inductance value of the heater 211 has a deviation, the main body 220 may control the voltage applied to the heater 211 such that a uniform heating operation may be performed according to a preset temperature profile. The temperature profile may be information indicating a temperature at which the aerosol generating device 200 is to be heated over time, and the temperature profile may be stored in the main memory 229 or the sub-memory 215a.

For example, an inductance value, a resistance value, and a capacitance value may be measured during a manufacturing process by an external measuring device for measuring impedance, and may be stored in the sub-memory 215a. For example, a voltage or current for heating the heater 211 according to the preset temperature profile may be obtained during the manufacturing process by the external measuring device and stored in the sub-memory 215a.

For example, a relationship between an actual temperature of the heater 211 and a measurement value of the temperature sensor 213 may be obtained in advance during the manufacturing process by the external measuring device and stored in the sub-memory 215a. The external measuring device may be an IR measuring device for measuring the actual temperature of the heater 211 while the heater 211 is being heated. The IR measuring device is a device for measuring a temperature by irradiating infrared rays in a direction in which the heater 211 is located.

An external measuring device capable of precise measurement is relatively expensive and large in size, and thus may not be mounted in an aerosol generating device carried by a user. As the heater module information is measured in advance by the external measuring device during the manufacturing process of the removable heater module 210 and stored in the sub-memory 215a, the aerosol generating device 200 may indirectly use precise measurement performance of an expensive external measuring device.

When the removable heater module 210 is combined to the main body 220, the controller 221 may obtain the heater module information from the sub-memory 215a, and may control the aerosol generating device 200 by using the heater module information. For example, the controller 221 may determine a control condition corresponding to the removable heater module 210 by using the obtained heater module information, and may control the aerosol generating device 200 based on the determined control condition.

The control condition may be a condition on which the heater 211 included in the removable heater module 210 performs a heating operation according to a temperature defined in a preset temperature profile. Even when a newly-installed removable heater module 210 has heater module information different from that of the previously-installed removable heater module 210, the aerosol generating device 200 may perform the consistent heating operation according to the preset temperature profile by determining a different control condition. For example, the controller 221 may determine a different voltage applied to the heater 211, or may determine a different calibration temperature by using the measurement value of the temperature sensor 213.

For example, when the removable heater module 210 is replaced with another removable heater module (e.g., 210b of FIG. 2), the controller 221 may determine a different control condition for the newly-installed removable heater module 210b based on the heater module information obtained from the removable heater module 210b, and control the aerosol generating device 200 according to the different control condition such that the heating operation is consistently performed according to the preset temperature profile.

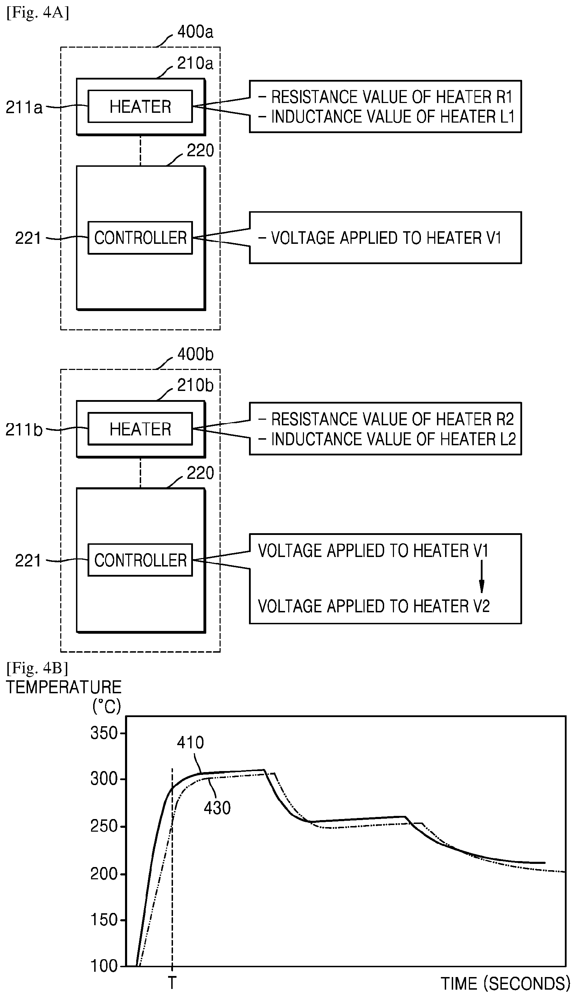

For example, the controller 221 may determine a voltage provided to the heater 211, based on the heater module information. A detailed method of determining the voltage provided to the heater 211 will be described later with reference to FIGS. 4A to 7.

Also, the controller 221 may determine a calibration temperature to be used in control of the aerosol generating device 200, based on the heater module information. A detailed method of determining the calibration temperature will be described later with reference to FIGS. 8 to 11.

The communicator 225 is a hardware component supporting a wired or wireless communication function, and may provide the aerosol generating device 200 with a function of communicating with an external electronic device. The communicator 225 may provide terminals for performing data communication or receiving charging power and communication interfacing modules for performing wireless communication (e.g., Wi-Fi, Wi-Fi direct, Bluetooth, near-field communication (NFC), etc.) with external electronic devices.

The user interface 227 may provide the user with information about a state of the aerosol generating device 200, or may receive information required for an operation of the aerosol generating device 200 from the user. The user interface 227 may include various interfacing devices, such as a display or a lamp for outputting visual information, a motor for outputting haptic information, a speaker for outputting sound information, and input/output (I/O) interfacing devices (e.g., a button or a touch screen) for receiving information input from the user or outputting information to the user.

However, the aerosol generating device 200 may be implemented by selecting only some of the various examples of the communicator 225 and the various examples of the user interface 227 described above.

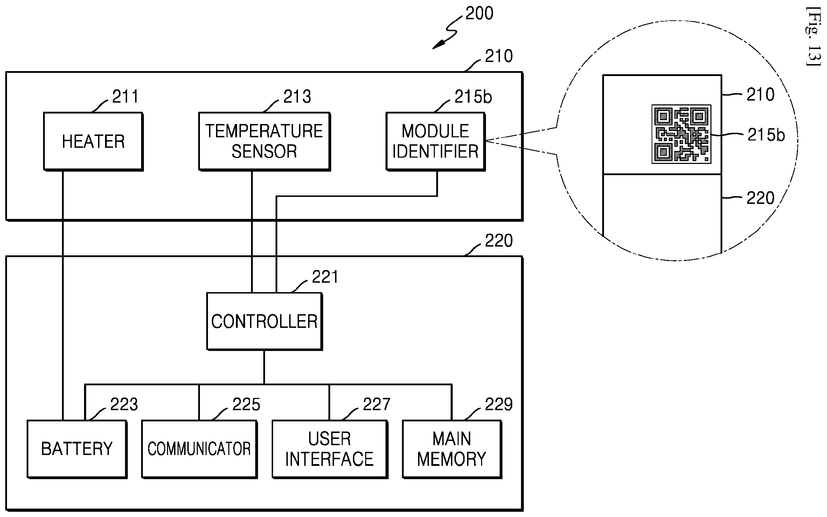

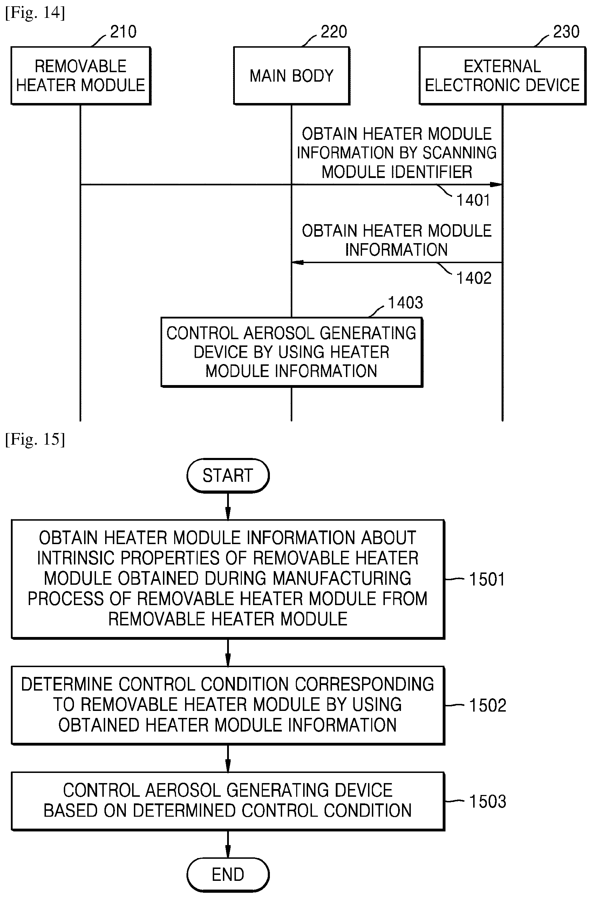

The communicator 225 and/or the user interface 227 may be used to obtain heater module information in another embodiment in which a module identifier 215b (FIG. 13) is used instead of the sub-memory 215a. Another method of obtaining the heater module information will be described in detail later with reference to FIGS. 13 and 14.

The main memory 229 is a hardware component for storing various pieces of data processed in the aerosol generating device 200, and the main memory 229 may store data processed or to be processed by the controller 221. For example, when the removable heater module 210 is initially combined to the main body 220, the main memory 229 may store the heater module information obtained from the sub-memory 215a via the controller 221. After the removable heater module 210 is initially combined to the main body 220, the controller 221 may obtain the heater module information from the main memory 229.

The memory 229 may include various types of memories, such as random access memory (RAM), such as dynamic random access memory (DRAM) or static random access memory (SRAM), ROM, and EEPROM.

The main memory 229 may store an operating time of the aerosol generating device 200, a maximum number of puffs, a current number of puffs, at least one temperature profile, data on a user's smoking pattern, etc. Furthermore, the heater module information obtained from the removable heater module 210 may be stored in the main memory 229.

FIG. 4A is a diagram illustrating a method of controlling an aerosol generating device by using a new heater parameter when a removable heater module is replaced, according to an embodiment. An aerosol generating device 400a at the top illustrates that a first removable heater module 210a is combined to a main body 220, and an aerosol generating device 400b at the bottom illustrates that a first removable heater module 210a has been replaced by a second removable heater module 210b. It is assumed that the aerosol generating device 400a at the top performs a heating operation accurately according to a preset temperature profile.

Referring to FIG. 4A, heater module information may include heater parameters related to intrinsic properties of heaters, i.e., first and second heaters 211a and 211b. The heater parameters may include resistance values and inductance values of the heaters 211a and 211b which are included in the first and second heater modules 210a and 210b, respectively.

Even though the second removable heater module 210b is newly combined to the main body 220, the controller 221 may use the heater parameters to control the aerosol generating device 400b to perform an accurate heating operation according to a preset temperature profile as before. The removable heater modules 210a and 210b may have different intrinsic properties of the heaters 211a and 211b due to variations in manufacturing processes. For example, if the heaters 211a and 211b are the induction heater described above with reference to FIG. 1A, the heaters 211a and 211b may have different resistance values and inductance values.

The main memory 229 may store a correlation between the heater parameters and voltages or currents applied to the heaters 211a and 211b. The controller 221 may determine voltages applied to the heaters 211a and 211b by using the correlation between the heater parameters and the voltages or currents applied to the heaters 211a and 211b.

For example, if the new second heater 211b has a resistance value R2 and an inductance value L2, which show a certain deviation from a resistance value R1 and an inductance value L1 of the existing first heater 211a, respectively, the controller 221 may determine that a voltage V2 is to be applied to the second heater 211b based on the correlation between the heater parameters and the voltages applied to the heaters 211a and 211b, such that the second heater 211b may perform the same heating operation according to a preset temperature profile.

The correlation between the heater parameters and the voltages applied to the heaters 211a and 211b may be stored in the main memory 229. The correlation may indicate that a voltage V1 corresponds to the resistance R1 and the inductance value L1 of the first heater 211a, and the voltage V2 corresponds to the resistance R2 and the inductance value L2 of the second heater 211b.

In the first removable heater module 210a, the controller 221 may provide a voltage V1 to the first heater 211a. If the first removable heater module 210a is replaced by the second removable heater module 210b and the same voltage V1 is provided to the second heater 211b, a uniform heating operation according to the preset temperature profile may not be performed, because the second heater 211b has the resistance value R2 and the inductance value L2 that are different from those of the first heater 211a.

FIG. 4B is a graph for comparing a case where the controller 221 uses a heater parameter before replacement with a case where the controller 221 uses a heater parameter of a new removable heater module, according to an embodiment. Referring to 4B, a first graph 410 illustrates that the first removable heater module 210a of FIG. 4A is controlled according to the voltage V1, and a second graph 430 illustrates that the second removable heater module 210b of FIG. 4A is still controlled according to the same voltage V1.

In an induction heater, different frequencies may be applied to the heaters 211a and 211b so that each of the heaters 211a and 211b may be heated to a same temperature for a same time period. The frequencies here refers to frequencies of the voltages applied to the heaters 211a and 211b. Hereinafter, the description that the controller 221 applies certain frequencies to the heaters 211a and 211b may indicate that a voltage of the battery 223 is controlled to be applied to the heaters 211a and 211b at the certain frequencies.

The heaters 211a and 211b may have different heating efficiency according to the frequencies applied to the heaters 211a and 211b. For example, in the case of the induction heater, i.e., the heater 130 (FIG. 1A), described above with reference to FIG. 1A, as a certain frequency is applied to the coil 131 (FIG. 1A), an alternating magnetic field according to the certain frequency may be formed, and the susceptor 132 (FIG. 1A) may generate heat due to exposure to the alternating magnetic field. The heating efficiency may refer to a degree to which the susceptor 132 generates heat (i.e., a heating temperature) given the applied frequency. The controller 221 may determine a frequency of a voltage or current to be applied to the coil 131 by using a heater parameter.

Frequencies used to heat the heaters 211a and 211b may be different from each other. The frequencies for the heaters 211a and 211b may be determined to maximize the heating efficiency of the heaters 211a and 211b. The frequencies for maximizing the heating efficiency of the heaters 211a and 211b may be determined based on resonance frequencies of the heaters 211a and 211b. For example, the frequencies for maximizing the heating efficiency of the heaters 211a and 211b may be the resonance frequencies of the heaters 211a and 211b, or frequencies within a certain range from the resonance frequencies.

A method by which the controller 221 obtains the resonance frequencies of the first and second heaters 211a and 211b may vary. For example, the controller 221 may calculate a resonance frequency value based on the resistance values of the heaters 211a and 211b, the inductance values of the heaters 211a and 211b, or capacitance values included in the main body 220. Also, the controller 221 may obtain, from the sub-memory 215a (FIG. 2), a resonance frequency value which is predetermined and in advance during a manufacturing process.

Hereinafter, for convenience of description, it will be assumed that a frequency for maximizing the heating efficiency of the first heater 211a is 140 kHz, a frequency for maximizing the heating efficiency of the second heater 211b is 150 kHz, and the frequency for maximizing the heating efficiency of the second heater 211b is unknown to the main body 220 until the second heater 211b is combined thereto.

Referring to the first graph 410 and the second graph 430, it may be seen that the first heater 211a is heated to 290 °C and the second heater 211b is heated to 250 °C, at time T. That is, the first heater 211a at room temperature may be heated to 290 °C if a frequency of 140 kHz is applied from a start of a heating operation until the time T. However, because the second heater 211b has different intrinsic properties from those of the first heater 211a, even if the voltage of 140 kHz is applied to the second heater 211b from the start of the heating operation until the time T as in the case of the first heater 211a, the second heater 211b at room temperature may be heated to only 250 °C. According to an embodiment, when the first removable heater module 210a is replaced by the second removable heater module 210b, the controller 221 may apply a voltage of 150 kHz to the second heater 211b so that the second heater 211b may be heated to 290 °C at the time T.

The controller 221 may determine frequencies of voltages or currents to be applied to the heaters 211a and 211b by using the heater parameter. The controller 221 may determine the frequency of the voltage or current to be applied to the coil 131 (FIG. 1A), based on at least one of the heater parameters, such as the inductance value L2 of the second heater 211b, the resistance value R2 of the second heater 211b, and the resonance frequency value obtained during the manufacturing process.

For example, the controller 221 may obtain the resistance value R2 of the second heater 211b and the inductance value L2 of the second heater 211b from the second removable heater module 210b, and may determine that the second heater 211b may be heated to 290 °C at the time T1 if a voltage V2 having a frequency of 150 kHz is applied to the second heater 211b. For example, the controller 221 may obtain a resonance frequency from the second removable heater module 210b, and based on the resonance frequency, may determine that the frequency of the voltage V2 to be applied to the second heater 211b is 150 kHz.

When the voltage V2 having a frequency of 150 kHz is applied to the second heater 211b, even though the second heater 211b has different intrinsic properties from those of the first heater 211a, the second heater 211b may perform the heating operation according to the preset temperature profile, as shown in the first graph 410 of FIG. 4B. By applying a frequency corresponding to the optimum heating efficiency of the heaters 211a and 211b, the controller 221 may improve the power efficiency.

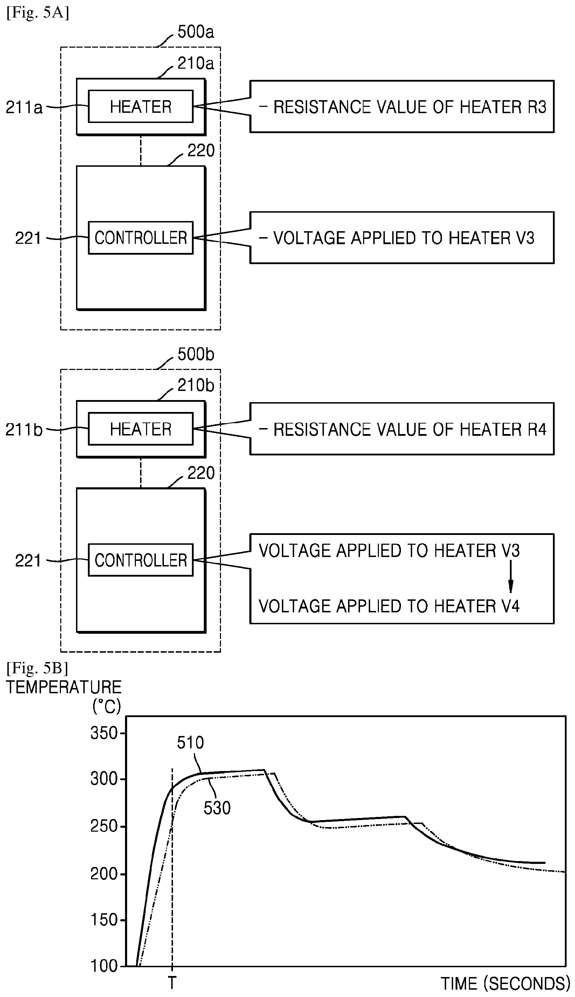

Hereinbefore, it has been described that when the heaters 211a and 211b are induction heaters, the frequency of the voltage provided for each of the heaters 211a and 211b to perform a uniform heating operation according to the preset temperature profile may be different. In another embodiment, the heaters 211a and 211b may be electrically resistive heaters. Hereinafter, with reference to FIGS. 5A and 5B, it will be described that a voltage applied for each electrical resistive heater to perform a uniform heating operation may be different.

FIG. 5A is a diagram illustrating a method of controlling an aerosol generating device by using a new heater parameter when a removable heater module is replaced, according to another embodiment. An aerosol generating device 500a shown at the top illustrates that a first removable heater module 210a is combined to a main body 220, and an aerosol generating device 500b at the bottom illustrates that a first removable heater module 210a has been replaced by a second removable heater module 210b. It is assumed that the aerosol generating device 500a at the top performs a heating operation accurately according to a preset temperature profile.

FIG. 5B is a graph for comparing a case where the controller 221 uses a heater parameter before replacement with a case where the controller 221 uses a heater parameter of a new removable heater module, according to another embodiment. Referring to 5B, a first graph 510 illustrates that the first removable heater module 210a of FIG. 5A is controlled according to a voltage V3, and a second graph 530 illustrates that the second removable heater module 210b of FIG. 5A is still controlled according to the same voltage V3.

Referring to FIG. 5B, it may be seen that even when the same voltage V3 is applied to each of the heaters 211a and 211b, because the heaters 211a and 211b respectively have resistance values R3 and R4 which are different from each other, the first heater 211a is heated to 290 °C, and the second heater 211b is heated to 250 °C, at time T. For example, due to variations in manufacturing processes, it may be assumed that the resistance value R3 of the first heater 211a is 5 Ω, and the resistance value R4 of the second heater 211b is 5.1 Ω. That is, the first heater 211a at room temperature may be heated to 290 °C when a voltage of 10 V is applied thereto from a start of a heating operation until the time T. However, because the second heater 211b has a different resistance value from that of the first heater 211a, even if the voltage of 10 V is applied to the second heater 211b until the time T, the second heater 211b at room temperature may be heated up to only 250 °C.

If the first removable heater module 210a is replaced by the second removable heater module 210b, the controller 221 may apply the voltage V4 higher than 10 V to the second heater 211b so that the second heater 211b may also be heated to 290 °C at the time T. In this case, the voltage V4 may be determined by using a correlation between a heater parameter and a voltage applied to the heaters 211a and 211b.

The control unit 221 may obtain the resistance value R4 of the second heater 211b from the second removable heater module 210b, and may determine the voltage V4 to be applied to the second heater 211b by using the resistance value R4. The controller 221 may provide the voltage V4 to the second heater 211b instead of the voltage V3 applied to the first heater 211a. When the voltage V4 is applied to the second heater 211b, even though the second heater 211b has different intrinsic properties from those of the first heater 211a, the second heater 211b may perform a uniform heating operation according to the preset temperature profile, as shown in the first graph 510 of FIG. 5B.

The numerical values described above with reference to FIGS. 4A to 5B are merely examples selected for clarity of description, and the resistance values of the heaters 211a and 211b, the inductance values of the heaters 211a and 211b, and the magnitudes or frequencies of the voltages applied to the heaters 211a and 211b are not limited to the above-described numerical values.

For convenience of description, the voltages applied to the heaters 211a and 211b from the start of the heating operation to the time T have been described with reference to FIGS. 4B and 5B. However, even after the time T, the magnitudes, the frequencies, or both the magnitudes and frequencies of the voltages applied to the heaters 211a and 211b may be determined in order to perform the heating operation according to the preset temperature profile over time.

In FIGS. 4A to 5B, it has been described that the controller 221 determines a voltage applied to each of the heaters 211a and 211b by using an obtained resistance value and/or inductance value. However, a value of the voltage provided for each of the heaters 211a and 211b to perform the heating operation according to the preset temperature profile may also be measured in advance during the manufacturing process and stored in the removable heater modules 210a and 210b. For example, the value of the voltage provided for each of the heaters 211a and 211b to perform the heating operation according to the preset temperature profile may be included in a voltage profile. In other words, the voltage profile may include information about the magnitudes and/or frequencies of the voltages applied for the heaters 211a and 211b over time to perform the heating operation according to the preset temperature profile. The controller 221 may obtain voltage profiles included in the removable heater modules 210a and 210b and apply voltages to the heaters 211a and 211b according to the voltage profiles.

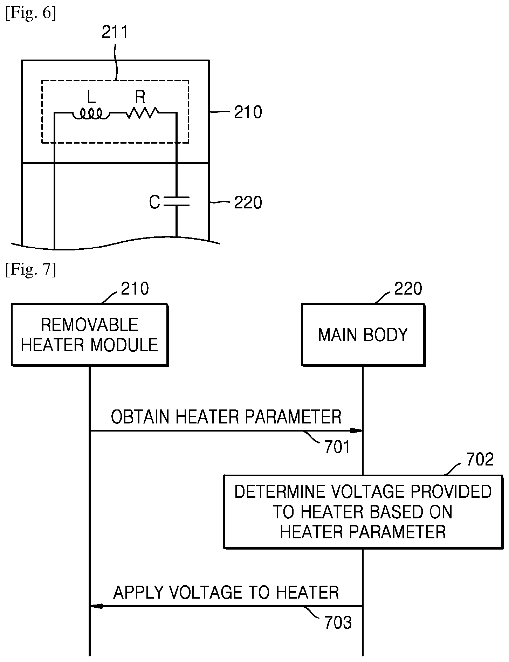

FIG. 6 is a diagram illustrating a method of determining a frequency of a voltage to be applied to the heater 211 by using a heater parameter, according to an embodiment.

Referring to FIG. 6, when the main body 220 is combined to the removable heater module 210, the controller 221 may determine a voltage to be applied to the heater 211 by using a main body heater parameter related to a circuit unit of the main body 220 that is electrically connected to the heater 211. The main body heater parameter may be measured during a manufacturing process of the main body 220 and stored in the main memory 229. For example, the main body heater parameter may be a capacitance value of the circuit unit.

Each heater 211 of the removable heater module 210 may have different intrinsic properties, and properties of the circuit unit of the main body 220 that is electrically connected to the heater 211 may also be different for each main body 220. The controller 221 may accurately determine a frequency to be applied to the heater 211 in consideration of both the main body heater parameter and a heater parameter of the heater 211.

For example, an inductance value of the heater 211 may be L[H], a resistance value of the heater 211 may be R[Ω], and a capacitance value of the circuit unit electrically connected to the heater 211 may be C[F]. The above-described values may be stored in the sub-memory 215a and/or the main memory 229. The controller 221 may determine a resonance frequency based on pre-stored values, and may determine a frequency for maximizing heating efficiency of the heater 211 (e.g., a resonance frequency or a frequency within a certain range from the resonance frequency).

FIG. 7 is a flowchart illustrating a method of applying a voltage to the heater 211 by using a heater parameter, according to an embodiment.

Referring to FIG. 7, in operation 701, the main body 220 may obtain a heater parameter from the removable heater module 210. If a heater parameter has been obtained and stored in the main memory 229 when the removable heater module 210 is initially combined to the main body 220, the controller 221 of the main body 220 may obtain the heater parameter from the main memory 229.

In operation 702, the main body 220 may determine a voltage to be applied to the heater 211 by using the heater parameter. In operation 703, the main body 220 may apply the determined voltage to the heater 211.

Meanwhile, the heater 211 may be heated above 300 °C, depending on the type of an aerosol generating article. In general, the temperature sensor 213 provided to measure a temperature of the heater 211 is not directly attached to the heater 211 so as to prevent damage due to heating of the heater 211. In this case, the temperature measured by the temperature sensor 213 may not be accurate.

The controller 221 may obtain a measurement value measured by the temperature sensor 213, and after a series of calibration processes using a temperature sensor parameter, a calibration temperature to be used in control of the aerosol generating device 200 may be determined.

For each removable heater module 210, the temperature sensor parameter required for calibration of a temperature (e.g., a measurement value) of the heater 211 detected by the temperature sensor 213 may be different. The controller 221 may accurately determine the calibration temperature to be used in control of the aerosol generating device 200 by using a temperature sensor parameter unique to the temperature sensor 213 and the measurement value of the temperature sensor 213. Hereinafter, an exemplary method of determining a calibration temperature will be described with reference to FIGS. 8 to 11, based on the assumption that the heater 211 is heated according to a preset temperature profile over time.

The temperature sensor parameter may include parameters related to intrinsic properties of the temperature sensor 213, such as a measurement value of the temperature sensor 213 which is obtained by measuring a temperature of the heater 211 included in the removable heater module 210, an actual temperature of the heater 211, a relationship between the measurement value and the actual temperature, and a polynomial modeled based on the relationship between the actual temperature and the measurement value.

FIG. 8 is a diagram intuitively illustrating a difference between a temperature of the heater 211 measured by the temperature sensor 213 and an actual temperature of the heater 211, according to an embodiment.

Referring to FIG. 8, it may be seen that a graph 810 of temperatures detected by the temperature sensor 213 always has a higher value than a graph 830 of actual temperatures of the heater 211. That is, FIG. 8 illustrates that the temperature of the heater 211 measured by the temperature sensor 213 is generally higher than the actual temperature of the heater 211, and, in order for the controller 221 to properly correct the temperature of the heater 211 measured by the temperature sensor 213, the temperature of the heater 211 measured by the temperature sensor 213 needs to be calibrated with an appropriate compensation value.

In FIG. 8, because the temperature of the heater 211 measured by the temperature sensor 213 is higher than the actual temperature of the heater 211, the compensation value is a negative number. However, in some embodiments, the temperature of the heater 211 measured by the temperature sensor 213 may be lower than the actual temperature of the heater 211, in which case the compensation value may be a positive number.

In order to minimize such a deviation, the controller 221 may calibrate a measurement value of the temperature sensor 213 by a compensation value, and may determine the calibrated measurement value as a calibration temperature that is identical or close to the actual temperature of the heater 211. The compensation value used by the controller 221 to calibrate the measurement value of the temperature sensor 213 may be a value calculated by using a temperature sensor parameter.

The controller 221 may determine a calibration temperature by using a temperature sensor parameter. The temperature sensor parameter may be determined based on a rate of change of the temperature measured by the temperature sensor 213 while the heater 211 is heated, during the manufacturing process of the removable heater module 210. For example, the calibration temperature may be determined by a polynomial calculated based on the rate of change of the temperature measured by the temperature sensor 213.

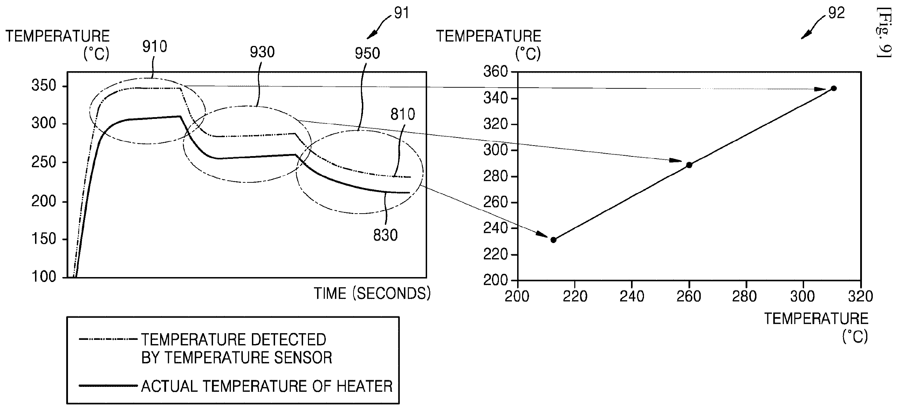

FIG. 9 is a diagram illustrating a method of determining a calibration temperature by using a polynomial calculated based on a rate of change of a temperature measured by the temperature sensor 213, according to an embodiment.

First, a left figure 91 of FIG. 9 shows a result of comparing the graphs of the temperature of the heater 211 measured by the temperature sensor 213 and the actual temperature of the heater 211 as shown in FIG. 8.

The graphs of the left figure 91 are divided into a first section 910, a second section 930, and a third section 950. The first section 910 refers to a section in which the temperature of the heater 211 is maintained constant after reaching a maximum temperature (about 310 °C). The second section 930 refers to a section in which the temperature of the heater 211 that has been maintained constant in the first section 910 is lowered at a constant rate, and then is maintained constant at the lowered temperature. The third section 950 refers to a section in which the temperature of the heater 211 that has been maintained constant in the second section 930 is lowered again at a constant rate.

The right figure 92 of FIG. 9 shows a graph of a polynomial. In detail, the right figure 92 is a graph of a polynomial for calculating a calibration temperature to which a compensation value is added, and the controller 221 may determine the calibration temperature to which the compensation value is added, based on the polynomial according to the right figure 92.

[Equation 1]

$$y = -0.0004x^2 + 1.4079x - 48.202$$

Equation 1 represents a polynomial for the right figure 92. In Equation 1, x indicates the calibration temperature to which the compensation value is added, and y indicates the temperature of the heater 211 measured by the temperature sensor 213. For example, referring to the left figure 91, the temperature of the heater 211 measured by the temperature sensor 213 in the first section 910 is maintained at 349 °C, the temperature of the heater 211 measured by the temperature sensor 213 in the second section 930 is maintained at 290 °C, and an average of the temperature of the heater 211 measured by the temperature sensor 213 in the third section 950 is 233 °C. When 349 °C, 290 °C, and 233 °C, which are temperature values observed in the left figure 91, are respectively substituted for y of Equation 1, and the corresponding x values obtained by using the inverse function of Equation 1 may be 310 °C, 260 °C, and 213 °C, and these x values may be used as the calibration temperature to which the compensation value is added.

As a result, by combining the right figure 92 and Equation 1, it may be seen that a compensation value in the first section 910 of the left figure 91 is 39 °C as obtained by subtracting 310 °C from 349 °C, a compensation value in the second section 930 is 30 °C as obtained by subtracting 260 °C from 290 °C, and a compensation value in the third section 950 is 20 °C as obtained by subtracting 213 °C from 233 °C.

Equation 1 is an example of the polynomial determined based on the rate of change of the temperature measured by the temperature sensor 213. The polynomial may be modeled by using the fact that a deviation in the first section 910 of the left figure 91 is greater than 35 °C, a deviation in the second section 930 is equal to 30 °C, and a deviation in the third section 950 is smaller than 30 °C. A polynomial referred to by the controller 221 to determine the calibration temperature may be different from Equation 1. For example, although Equation 1 is a second-order polynomial, in some embodiments, an equation used by the controller 221 to determine the calibration temperature may be a polynomial other than a second-order polynomial.

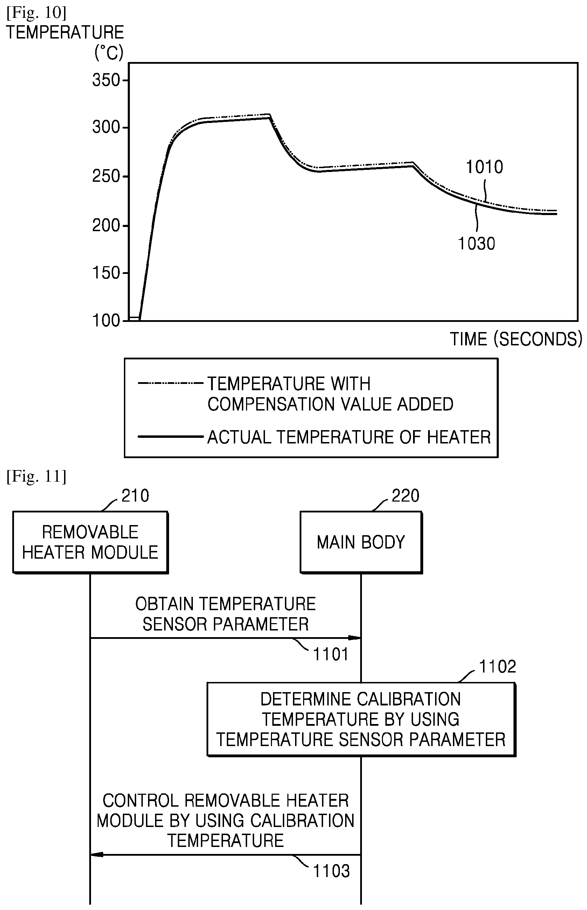

FIG. 10 is a diagram schematically illustrating a graph of a calibration temperature and an actual temperature of the heater 211 according to an embodiment.

Comparing FIG. 10 with the left figure 91 of FIG. 9, it may be seen that the deviation between the calibration temperature to which the compensation value is added and the actual temperature of the heater 211 is significantly reduced. For example, the temperature measured by the temperature sensor 213 in the first section is about 349 °C, but by adding the compensation value of -37 °C, the temperature is adjusted to the calibrated temperature of 312 °C, which is very close to 310 °C which is the actual temperature of the heater 211. Referring to FIG. 10, it may be seen that the calibration temperature to which the compensation value is added has no significant difference from the actual temperature of the heater 211 in the second section and the third section as well.

A form in which the above-described polynomial is stored in the sub-memory 215a is not limited. For example, the entire formula of the above-described polynomial may be stored, the coefficients of the above-described polynomial may be stored, or data corresponding to the x and y values of the above-described polynomial may be stored in the form of a matching table without separately modeling the polynomial. The controller 221 may determine the calibration temperature with reference to the polynomial stored in the sub-memory 215a.

By using the temperature sensor parameter of each removable heater module 210, even though intrinsic properties of the temperature sensor 213 are different for each removable heater module 210, the aerosol generating device 200 may determine a reliable calibration temperature that may be utilized for overall control of the aerosol generating device 200.

FIG. 11 is a flowchart illustrating a method of determining a calibration temperature by using a temperature sensor parameter, according to an embodiment.

Referring to FIG. 11, in operation 1101, the main body 220 may obtain a temperature sensor parameter from the removable heater module 210. When the heater 211 of the removable heater module 210 performs a heating operation, the main body 220 may obtain a measurement value that is a temperature of the heater 211 measured by the temperature sensor 213.

The controller 221 of the main body 220 may obtain the temperature sensor parameter. For example, if a temperature sensor parameter has been obtained and stored in the main memory 229 of the main body 220 when the removable heater module 210 is combined to the main body 220, the controller 221 of the main body 220 may obtain the temperature sensor parameter from the main memory 229.

In operation 1102, the main body 220 may determine a calibration temperature by using the temperature sensor parameter. The controller 221 may determine a calibration temperature to be finally used in control of the aerosol generating device 200, by using the temperature sensor parameter and the measurement value of the temperature sensor 213.

For each removable heater module 210, the temperature sensor parameter required for calibration of a temperature (e.g., a measurement value) of the heater 211 detected by the temperature sensor 213 may be different. The controller 221 may accurately determine the calibration temperature to be finally used in control of the aerosol generating device 200, by using the temperature sensor parameter unique to the temperature sensor 213 and the measurement value of the temperature sensor 213.

In operation 1103, the main body 220 may control the aerosol generating device 200 by using the calibration temperature. For example, when it is determined that the aerosol generating device 200 is in an overheated state in which the calibration temperature has a deviation beyond a certain range from a preset temperature profile, the main body 220 may stop the supply of power to the heater 211, or may reduce the power supplied from the battery 223 to the heater 211.

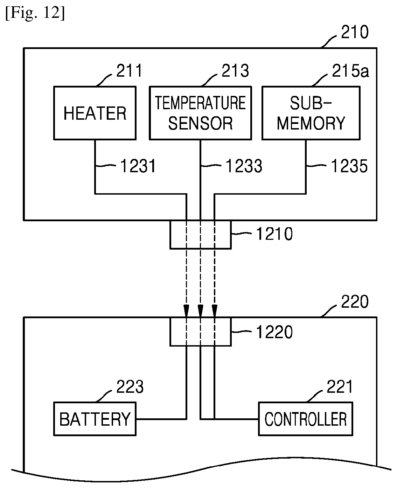

FIG. 12 is a diagram illustrating a structure in which the removable heater module 210 and the main body 220 are combined to each other, according to an embodiment. Referring to FIG. 12, the removable heater module 210 may include a first connection terminal 1210 that provides an electrical connection with the main body 220 when the removable heater module 210 and the main body 220 are combined to each other, and the main body 220 may include a second connection terminal 1220 corresponding to the first connection terminal 1210.

Each of the removable heater module 210 and the main body 220 may include various electronic components, and each component may form a plurality of electrical connections. For example, the heater 211 may form an electrical connection 1231 with the battery 223, the temperature sensor 213 may form an electrical connection 1233 with the controller 221, and the sub-memory 215a may form an electrical connection 1235 with the controller 221.

The controller 221 may control the removable heater module 210 or receive information from the removable heater module 210 via the electrical connections 1231, 1233, and 1235. For example, a voltage or current may be applied to the heater 211 via the electrical connection 1231 between the heater 211 and the battery 223, a measurement value may be obtained from the temperature sensor 213 via the electrical connection 1233 between the temperature sensor 213 and the controller 221, or heater module information may be obtained from the sub-memory 215a via the electrical connection 1235 between the controller 221 and the sub-memory 215a.

The removable heater module 210 may include at least one first connection terminal 1210 for forming the above-described electrical connections. For example, the first connection terminal 1210 may be connected to the heater 211 and used to form the electrical connection 1231 between the battery 223 and the heater 211. The heater 211 may receive power from the battery 223 via the first connection terminal 1210.

For example, the first connection terminal 1210 may be connected to the temperature sensor 213 and used to form the electrical connection 1233 between the controller 221 and the temperature sensor 213. The controller 221 may obtain a measurement value of the temperature sensor 213 from the temperature sensor 213 via the first connection terminal 1210.

For example, the first connection terminal 1210 may be connected to the sub-memory 215a and used to form the electrical connection 1235 between the controller 221 and the sub-memory 215a. The controller 221 may obtain heater module information from the sub-memory 215a via the first connection terminal 1210.

Although FIG. 12 illustrates each of the first connection terminal 1210 and the second connection terminal 1220 as a single component, the numbers of the first connection terminal 1210 and the second connection terminal 1220 may be appropriately selected so as to have a ratio of 1:1 or 1:n according to the number of electrical connections required by the removable heater module 210.

The first connection terminal 1210 and the second connection terminal 1220 may have shapes that may engage with each other. For example, the first connection terminal 1210 may be formed to be sunken or protrude from an outer surface of the removable heater module 210, and the second connection terminal 1220 may be formed to protrude or be sunken from an outer surface of the main body 220. As the first connection terminal 1210 and the second connection terminal 1220 are formed to engage with each other, the removable heater module 210 and the main body 220 may be not only electrically connected, but also rigidly combined to each other.

The electrical connection 1235 between the sub-memory 215a and the controller 221 of FIG. 12 may be omitted when the sub-memory 215a is replaced by another component for storing heater module information.

FIG. 13 is a block diagram illustrating the aerosol generating device 200 according to another embodiment. Compared with the embodiments described above with reference to FIGS. 2 to 12, the embodiment of FIG. 13 differs in that it includes a module identifier 215b instead of the sub-memory 215a. Because the aerosol generating device 200 of FIG. 13 uses the module identifier 215b instead of the sub-memory 215a, the removable heater module 210 may be manufactured at a lower cost compared to a case where the sub-memory 215a is used.

The module identifier 215b may include heater module information about intrinsic properties of the removable heater module 210. The module identifier 215b may be a text or image that is displayed on an outer surface of the removable heater module 210 such that the heater module information about the intrinsic properties of the removable heater module 210 may be obtained by reading the module identifier 215b. For example, the text or image may be a product code, a quick response (QR) code, a barcode, or the like.

The heater module information may be obtained through the module identifier 215b by an external electronic device having a function of scanning an image. For example, an external electronic device (e.g., a smartphone) may obtain heater module information by scanning a QR code. The external electronic device may transmit the heater module information to the main body 220 by using the communicator 225.

The controller 221 may obtain the heater module information from the external electronic device by using at least one of the communicator 225 and the user interface 227. For example, a user may obtain heater module information from a QR code by using an external electronic device, and the controller 221 may obtain the heater module information via the communicator 225.

A method of obtaining the heater module information from the module identifier 215b is not limited to the above-described method of using the external electronic device. For example, the main body 220 may include a separate element for obtaining the heater module information from the module identifier 215b.

The aerosol generating device 200 of FIG. 13 may store the obtained heater module information in the main memory 229. In this case, even if the heater module information is obtained only once, the aerosol generating device 200 may perform the operations of the aerosol generating device 200 described above with reference to FIGS. 2 to 12 by using the heater module information stored in the main memory 229.

FIG. 14 is a flowchart illustrating a method of obtaining heater module information, according to another embodiment.

Referring to FIG. 14, in operation 1401, an external electronic device 230 may obtain heater module information by scanning the module identifier 215b displayed on an outer surface of the removable heater module 210. For example, the external electronic device 230 may obtain heater module information from a QR code.

In operation 1402, the main body 220 may obtain the heater module information from the external electronic device 230 by using at least one of the communicator 225 and the user interface 227. For example, the external electronic device 230 may transmit the heater module information to the communicator 225, and the controller 221 of the main body 220 may obtain the heater module information through the communicator 225.

In operation 1403, the main body 220 may control the aerosol generating device 200 by using the heater module information. A method of controlling the aerosol generating device 200 may include the controlling methods of the aerosol generating device 200 described with reference to FIGS. 2 to 12.

FIG. 15 is a flowchart illustrating an operating method of the aerosol generating device 200 according to an embodiment. Referring to FIG. 15, the operating method of the aerosol generating device 200 includes operations to be processed in the aerosol generating device 200 described above. Thus, even if omitted below, the descriptions about the aerosol generating device 200 of the above-described drawings are also applied to the operating method of the aerosol generating device 200 of FIG. 15.

In operation 1501, the controller 221 is detachably combined to the main body 220, and the controller 221 may obtain, from the removable heater module 210 having the heater 211 for heating an aerosol generating article, heater module information about intrinsic properties of the removable heater module 210.

In operation 1502, the controller 221 may determine a control condition corresponding to the removable heater module 210 by using the obtained heater module information.

In operation 1503, the controller 221 may control the aerosol generating device 200 based on the determined control condition.

Meanwhile, the above-described embodiments may also be implemented in the form of a recording medium including instructions executable by a computer, such as a program module executable by the computer. The computer-readable recording medium may be any available medium that can be accessed by a computer, including both volatile and nonvolatile media, and both removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

## Claims

1. An aerosol generating device (200, 400a, 400b, 500a, 500b) comprising:

   a main body (220) comprising a controller (221) and a battery (223); and
   a removable heater module (210a, 210b, 210c, 210d) removably combined to the main body (220), configured to heat an aerosol generating article, and comprising a heater (211) and a first memory (215a),
   wherein the first memory (215a) stores heater module information about intrinsic properties of the removable heater module (210a, 210b, 210c, 210d), the heater module information being obtained during a manufacturing process of the removable heater module (210a, 210b, 210c, 210d), and
   wherein the controller (221) is configured to obtain the heater module information from the first memory (215a) when the removable heater module (210a, 210b, 210c, 210d) is combined to the main body (220), determine a control condition corresponding to the removable heater module (210a, 210b, 210c, 210d) by using the obtained heater module information, and control the aerosol generating device (200) based on the determined control condition,
   wherein the heater module information comprises a first heater parameter related to intrinsic properties of the heater (211),
   the control condition includes a voltage or a current applied to the heater (211), and
   the controller (221) is further configured to determine the voltage or the current applied to the heater (211) based on a predetermined correlation between the first heater parameter and the voltage or the current applied to the heater (211),

wherein the first heater parameter represents a resistance value of the heater (211), an inductance value of the heater (211) or a resonance frequency value of the heater (211) obtained during the manufacturing process.

2. The aerosol generating device (200, 400a, 400b, 500a, 500b) of claim 1, wherein the control condition is a condition on which the heater (211) included in the removable heater module (210a, 210b, 210c, 210d) performs a heating operation according to a preset temperature profile.

3. The aerosol generating device (200, 400a, 400b, 500a, 500b) of claim 1, wherein

the heater (211) comprises a coil (131) configured to generate a magnetic field according to a voltage or a current provided by the battery (223), and a susceptor (132) configured to generate heat according to the magnetic field,
the control condition includes a frequency of a voltage or a current applied to the coil (131), and the controller (221) is further configured to determine the frequency of the voltage or the current applied to the coil (131), based on at least one of an inductance value of the heater (211), a resistance value of the heater (211), and a resonance frequency value obtained during the manufacturing process, which are included in the first heater parameter.

4. The aerosol generating device (200, 400a, 400b, 500a, 500b) of claim 1, wherein

the main body (220) further comprises a second memory (229) storing a second heater parameter related to a circuit unit of the main body (220) that is electrically connected to the heater (211) when the main body (220) is combined to the removable heater module (210a, 210b, 210c, 210d), and
the controller (221) is further configured to determine the voltage or the current applied to the heater (211) by using the second heater parameter and the first heater parameter.

5. The aerosol generating device (200, 400a, 400b, 500a, 500b) of claim 1, wherein

the removable heater module (210a, 210b, 210c, 210d) further comprises a temperature sensor (213) configured to measure a temperature of the heater (211),
the heater module information comprises a temperature sensor parameter related to intrinsic properties of the temperature sensor (213), and the controller (221) is further configured to determine a calibration temperature to be used in control of the aerosol generating device (200, 400a, 400b, 500a, 500b) by using the temperature sensor parameter and a measurement value representing the temperature of the heater (211) measured by the temperature sensor (213).

6. The aerosol generating device (200, 400a, 400b, 500a, 500b) of claim 5, wherein the controller (221) is further configured to calculate a compensation value based on the temperature sensor parameter, calibrate the measurement value based on the compensation value, and determine the calibration temperature based on the calibrated measurement value.

7. The aerosol generating device (200, 400a, 400b, 500a, 500b) of claim 5, wherein the temperature sensor parameter is determined based on a rate of change of a temperature of the heater (211) measured by the temperature sensor (213) while the heater (211) is heated during the manufacturing process of the removable heater module (210a, 210b, 210c, 210d).

8. The aerosol generating device (200, 400a, 400b, 500a, 500b) of claim 1, wherein

the removable heater module (210a, 210b, 210c, 210d) further comprises at least one first connection terminal (1210) configured to, when combined to the main body (220), form an electrical connection (1231) between the heater (211) and the battery (223) and an electrical connection (1235) between the controller (221) and the first memory (215a), and
the main body (220) further comprises at least one second connection terminal (1220) corresponding to the first connection terminal (1210), and is configured to apply a voltage or a current to the heater (211) via the electrical connection (1231) between the heater (211) and the battery (223) and obtain the heater module information from the first memory (215a) via the electrical connection (1235) between the controller (221) and the first memory (215a).

9. The aerosol generating device (200, 400a, 400b, 500a, 500b) of claim 8, wherein

the first connection terminal (1210) is sunken or protrudes from an outer surface of the removable heater module (210a, 210b, 210c, 210d), and
the second connection terminal (1220) protrudes or is sunken from an outer surface of the main body (220) so as to engage with the first connection terminal (1210).

10. The aerosol generating device (200, 400a, 400b, 500a, 500b) of claim 1, wherein the controller (221) is further configured to, when the removable heater module (210a, 210b, 210c, 210d) is replaced by a new removable heater module (210a, 210b, 210c, 210d), determine a new control condition by using new heater module information obtained from the new removable heater module (210a, 210b, 210c, 210d), and control the aerosol generating device (200, 400a, 400b, 500a, 500b) based on the new control condition such that the aerosol generating device (200, 400a, 400b, 500a, 500b) continues to perform a same heating operation.

11. An aerosol generating device (200, 400a, 400b, 500a, 500b) comprising:

a main body (220) comprising a controller (221) and a battery (223); and
a removable heater module (210a, 210b, 210c, 210d) removably combined to the main body (220), comprising a heater (211) and a module identifier (215b), and configured to heat an aerosol generating article,
wherein the module identifier (215b) is an image displayed on an outer surface of the removable heater module (210a, 210b, 210c, 210d), and comprises heater module information about intrinsic properties of the removable heater module (210a, 210b, 210c, 210d), the heater module information being readable by scanning, and
the controller (221) is configured to obtain the heater module information, determine a control condition corresponding to the removable heater module (210a, 210b, 210c, 210d) by using the obtained heater module information, and control the aerosol generating device (200, 400a, 400b, 500a, 500b) based on the determined control condition,
wherein the heater module information comprises a first heater parameter related to intrinsic properties of the heater (211),
the control condition includes a voltage or a current applied to the heater (211), and
the controller (221) is further configured to determine the voltage or the current applied to the heater (211) based on a predetermined correlation between the first heater parameter and the voltage or the current applied to the heater (211),
wherein the first heater parameter represents a resistance value of the heater (211), an inductance value of the heater (211) or a resonance frequency value of the heater (211) obtained during the manufacturing process.

12. The aerosol generating device (200, 400a, 400b, 500a, 500b) of claim 11, wherein

the main body (220) further comprises a communicator (225) configured to communicate with an external electronic device having a function of scanning the image, and
the controller (221) is further configured to obtain the heater module information from the external electronic device via the communicator (225), the heater module information being obtained by scanning the image in the external electronic device.

13. An operating method of an aerosol generating device (200, 400a, 400b, 500a, 500b) according to claims 1 and 11, the operating method comprising:

obtaining, from the removable heater module (210a, 210b, 210c, 210d) removably combined to the main body (220), heater module information about intrinsic properties of the removable heater module (210a, 210b, 210c, 210d), the heater module information being obtained during a manufacturing process of the removable heater module (210a, 210b, 210c, 210d);
determining the control condition corresponding to the removable heater module (210a, 210b, 210c, 210d) by using the obtained heater module information; and
controlling the aerosol generating device (200, 400a, 400b, 500a, 500b) based on the determined control condition.

**Patentansprüche**

1. Aerosolerzeugungsvorrichtung (200, 400a, 400b, 500a, 500b), die Folgendes umfasst:

einen Hauptkörper (220), der eine Steuereinheit (221) und eine Batterie (223) umfasst; und
ein lösbares Heizmodul (210a, 210b, 210c, 210d), das mit dem Hauptkörper (220) lösbar kombiniert ist, konfiguriert ist, einen Aerosolerzeugungsartikel zu erhitzen, und eine Heizvorrichtung (211) und einen ersten Speicher (215a) umfasst,
wobei der erste Speicher (215a) Heizmodulinformationen über intrinsische Eigenschaften des lösbaren Heizmoduls (210a, 210b, 210c, 210d) speichert und die Heizmodulinformationen während eines Herstellungsprozesses des lösbaren Heizmoduls (210a, 210b, 210c, 210d) erhalten werden,
die Steuereinheit (221) konfiguriert ist, die Heizmodulinformationen aus dem ersten Speicher (215a) zu erhalten, wenn das lösbare Heizmodul (210a, 210b, 210c, 210d) mit dem Hauptkörper (220) kombiniert ist, eine Steuerbedingung, die dem lösbaren Heizmodul (210a, 210b, 210c, 210d) entspricht, unter Verwendung der erhaltenen Heizmodulinformationen zu bestimmen und die Aerosolerzeugungsvorrichtung (200) auf der Grundlage der bestimmten Steuerbedingung zu steuern,

die Heizmodulinformationen einen ersten Heizparameter umfassen, der mit intrinsischen Eigenschaften der Heizvorrichtung (211) in Beziehung steht,

die Steuerbedingung eine Spannung oder einen Strom, die bzw. der an die Heizvorrichtung (211) angelegt wird, enthält und

die Steuereinheit (221) ferner konfiguriert ist, die Spannung oder den Strom, die bzw. der an die Heizvorrichtung (211) angelegt wird, auf der Grundlage einer vorgegebenen Korrelation zwischen dem ersten Heizparameter und der Spannung oder dem Strom, die bzw. der an die Heizvorrichtung (211) angelegt wird, zu bestimmen, wobei der erste Heizparameter einen Widerstandswert der Heizvorrichtung (211), einen Induktivitätswert der Heizvorrichtung (211) oder einen Resonanzfrequenzwert der Heizvorrichtung (211) repräsentiert, der während des Herstellungsprozesses erhalten wird.

2. Aerosolerzeugungsvorrichtung (200, 400a, 400b, 500a, 500b) nach Anspruch 1, wobei die Steuerbedingung eine Bedingung ist, unter der die Heizvorrichtung (211), die im lösbaren Heizmodul (210a, 210b, 210c, 210d) enthalten ist, eine Heizoperation gemäß einem voreingestellten Temperaturprofil durchführt.

3. Aerosolerzeugungsvorrichtung (200, 400a, 400b, 500a, 500b) nach Anspruch 1, wobei

die Heizvorrichtung (211) eine Spule (131), die konfiguriert ist, ein Magnetfeld gemäß einer Spannung oder einem Strom, die bzw. der durch die Batterie (223) bereitgestellt wird, zu erzeugen, und einen Suszeptor (132), der konfiguriert ist, Wärme entsprechend dem Magnetfeld zu erzeugen, umfasst,

die Steuerbedingung eine Frequenz einer Spannung oder eines Stroms, die bzw. der an die Spule (131) angelegt wird, enthält und

die Steuereinheit (221) ferner konfiguriert ist, die Frequenz der Spannung oder des Stroms, die bzw. der an die Spule (131) angelegt wird, auf der Grundlage eines Induktivitätswerts der Heizvorrichtung (211) und/oder eines Widerstandswerts der Heizvorrichtung (211) und/oder eines Resonanzfrequenzwerts, die während des Herstellungsprozesses erhalten werden und im ersten Heizparameter enthalten sind, zu bestimmen.

4. Aerosolerzeugungsvorrichtung (200, 400a, 400b, 500a, 500b) nach Anspruch 1, wobei

der Hauptkörper (220) ferner einen zweiten Speicher (229) umfasst, der einen zweiten Heizparameter speichert, der mit einer Schaltungseinheit des Hauptkörpers (220) in Beziehung steht, die mit der Heizvorrichtung (211) elektrisch verbunden ist, wenn der Hauptkörper (220) mit dem lösbaren Heizmodul (210a, 210b, 210c, 210d) kombiniert ist, und

die Steuereinheit (221) ferner konfiguriert ist, die Spannung oder den Strom, die bzw. der an die Heizvorrichtung (211) angelegt wird, unter Verwendung des zweiten Heizparameters und des ersten Heizparameters zu bestimmen.

5. Aerosolerzeugungsvorrichtung (200, 400a, 400b, 500a, 500b) nach Anspruch 1, wobei

das lösbare Heizmodul (210a, 210b, 210c, 210d) ferner einen Temperatursensor (213) umfasst, der konfiguriert ist, eine Temperatur der Heizvorrichtung (211) zu messen,

die Heizmodulinformationen einen Temperatursensorparameter umfassen, der mit intrinsischen Eigenschaften des Temperatursensors (213) in Beziehung steht, und

die Steuereinheit (221) ferner konfiguriert ist, eine Kalibrierungstemperatur, die bei der Steuerung der Aerosolerzeugungsvorrichtung (200, 400a, 400b, 500a, 500b) verwendet werden soll, unter Verwendung des Temperatursensorparameters und eines Messwerts, der die Temperatur der Heizvorrichtung (211) repräsentiert und durch den Temperatursensor (213) gemessen wird, zu bestimmen.

6. Aerosolerzeugungsvorrichtung (200, 400a, 400b, 500a, 500b) nach Anspruch 5, wobei die Steuereinheit (221) ferner konfiguriert ist, einen Ausgleichswert auf der Grundlage des Temperatursensorparameters zu berechnen, den Messwert auf der Grundlage des Ausgleichswerts zu kalibrieren und die Kalibrierungstemperatur auf der Grundlage des kalibrierten Messwerts zu bestimmen.

7. Aerosolerzeugungsvorrichtung (200, 400a, 400b, 500a, 500b) nach Anspruch 5, wobei der Temperatursensorparameter auf der Grundlage einer Änderungsrate einer Temperatur der Heizvorrichtung (211) bestimmt wird, die durch den Temperatursensor (213) gemessen wird, während die Heizvorrichtung (211) während des Herstellungsprozesses des lösbaren Heizmoduls (210a, 210b, 210c, 210d) erhitzt wird.

8. Aerosolerzeugungsvorrichtung (200, 400a, 400b, 500a, 500b) nach Anspruch 1, wobei

   das lösbare Heizmodul (210a, 210b, 210c, 210d) ferner mindestens einen ersten Verbindungsanschluss (1210) umfasst, der konfiguriert ist, dann, wenn er mit dem Hauptkörper (220) kombiniert ist, eine elektrische Verbindung (1231) zwischen der Heizvorrichtung (211) und der Batterie (223) und eine elektrische Verbindung (1235) zwischen der Steuereinheit (221) und dem ersten Speicher (215a) zu bilden, und

   der Hauptkörper (220) ferner mindestens einen zweiten Verbindungsanschluss (1220) umfasst, der dem ersten Verbindungsanschluss (1210) entspricht und konfiguriert ist, mittels der elektrischen Verbindung (1231) zwischen der Heizvorrichtung (211) und der Batterie (223) eine Spannung oder einen Strom an die Heizvorrichtung (211) anzulegen und mittels der elektrischen Verbindung (1235) zwischen der Steuereinheit (221) und dem ersten Speicher (215a) die Heizmodulinformationen aus dem ersten Speicher (215a) zu erhalten.

9. Aerosolerzeugungsvorrichtung (200, 400a, 400b, 500a, 500b) nach Anspruch 8, wobei

   der erste Verbindungsanschluss (1210) von einer Außenoberfläche des lösbaren Heizmoduls (210a, 210b, 210c, 210d) vertieft ist oder vorsteht und

   der zweite Verbindungsanschluss (1220) von einer Außenoberfläche des Hauptkörpers (220) vorsteht oder vertieft ist, um mit dem ersten Verbindungsanschluss (1210) in Eingriff zu sein.

10. Aerosolerzeugungsvorrichtung (200, 400a, 400b, 500a, 500b) nach Anspruch 1, wobei die Steuereinheit (221) ferner konfiguriert ist, dann, wenn das lösbare Heizmodul (210a, 210b, 210c, 210d) durch ein neues lösbares Heizmodul (210a, 210b, 210c, 210d) ersetzt wird, eine neue Steuerbedingung unter Verwendung von neuen Heizmodulinformationen, die vom neuen lösbaren Heizmodul (210a, 210b, 210c, 210d) erhalten wurden, zu bestimmen und die Aerosolerzeugungsvorrichtung (200, 400a, 400b, 500a, 500b) auf der Grundlage der neuen Steuerbedingung derart zu steuern, dass die Aerosolerzeugungsvorrichtung (200, 400a, 400b, 500a, 500b) fortfährt, dieselbe Heizoperation durchzuführen.

11. Aerosolerzeugungsvorrichtung (200, 400a, 400b, 500a, 500b), die Folgendes umfasst:

   einen Hauptkörper (220), der eine Steuereinheit (221) und eine Batterie (223) umfasst; und

   ein lösbares Heizmodul (210a, 210b, 210c, 210d), das mit dem Hauptkörper (220) lösbar kombiniert ist, eine Heizvorrichtung (211) und eine Modulkennung (215b) umfasst und konfiguriert ist, einen Aerosolerzeugungsartikel zu erhitzen,

   wobei die Modulkennung (215b) ein Bild ist, das an einer Außenoberfläche des lösbaren Heizmoduls (210a, 210b, 210c, 210d) angezeigt wird und Heizmodulinformationen über intrinsische Eigenschaften des lösbaren Heizmoduls (210a, 210b, 210c, 210d) umfasst, wobei die Heizmodulinformationen durch Abtasten lesbar werden,

   die Steuereinheit (221) konfiguriert ist, die Heizmodulinformationen zu erhalten, eine Steuerbedingung, die dem lösbaren Heizmodul (210a, 210b, 210c, 210d) entspricht, unter Verwendung der erhaltenen Heizmodulinformationen zu bestimmen und die Aerosolerzeugungsvorrichtung (200, 400a, 400b, 500a, 500b) auf der Grundlage der bestimmten Steuerbedingung zu steuern,

   die Heizmodulinformationen einen ersten Heizparameter umfassen, der mit intrinsischen Eigenschaften der Heizvorrichtung (211) in Beziehung steht,

   die Steuerbedingung eine Spannung oder einen Strom, die bzw. der an die Heizvorrichtung (211) angelegt wird, enthält und

   die Steuereinheit (221) ferner konfiguriert ist, die Spannung oder den Strom, die bzw. der an die Heizvorrichtung (211) angelegt wird, auf der Grundlage einer vorgegebenen Korrelation zwischen dem ersten Heizparameter und der Spannung oder dem Strom, die bzw. der an die Heizvorrichtung (211) angelegt wird, zu bestimmen, wobei der erste Heizparameter einen Widerstandswert der Heizvorrichtung (211), einen Induktivitätswert der Heizvorrichtung (211) oder einen Resonanzfrequenzwert der Heizvorrichtung (211) repräsentiert, der während des Herstellungsprozesses erhalten wird.

12. Aerosolerzeugungsvorrichtung (200, 400a, 400b, 500a, 500b) nach Anspruch 11, wobei

   der Hauptkörper (220) ferner einen Kommunikator (225) umfasst, der konfiguriert ist, mit einer externen elektronischen Vorrichtung zu kommunizieren, die eine Funktion des Abtastens des Bilds besitzt, und

   die Steuereinheit (221) ferner konfiguriert ist, die Heizmodulinformationen von der externen elektronischen Vorrichtung mittels des Kommunikators (225) zu erhalten, wobei die Heizmodulinformationen durch Abtasten des Bilds in der externen elektronischen Vorrichtung erhalten werden.

13. Betriebsverfahren einer Aerosolerzeugungsvorrichtung (200, 400a, 400b, 500a, 500b) nach Anspruch 1 und 11, wobei das Betriebsverfahren Folgendes umfasst:

Erhalten von dem lösbaren Heizmodul (210a, 210b, 210c, 210d), das mit dem Hauptkörper (220) lösbar kombiniert ist, von Heizmodulinformationen über intrinsische Eigenschaften des lösbaren Heizmoduls (210a, 210b, 210c, 210d), wobei die Heizmodulinformationen während eines Herstellungsprozesses des lösbaren Heizmoduls (210a, 210b, 210c, 210d) erhalten werden;

Bestimmen der Steuerbedingung, die dem lösbaren Heizmodul (210a, 210b, 210c, 210d) entspricht, unter Verwendung der erhaltenen Heizmodulinformationen und

Steuern der Aerosolerzeugungsvorrichtung (200, 400a, 400b, 500a, 500b) auf der Grundlage der bestimmten Steuerbedingung.

**Revendications**

1. Dispositif de production d'aérosol (200, 400a, 400b, 500a, 500b) comportant :

un corps principal (220) comportant une commande (221) et une batterie (223) ; et un module de chauffage amovible (210a, 210b, 210c, 210d) combiné au corps principal (220) de manière amovible, configuré pour chauffer un article de production d'aérosol, et comportant un élément chauffant (211) et une première mémoire (215a),

dans lequel la première mémoire (215a) stocke des informations de module de chauffage concernant des propriétés intrinsèques du module de chauffage amovible (210a, 210b, 210c, 210d), les informations de module de chauffage étant obtenues pendant un processus de fabrication du module de chauffage amovible (210a, 210b, 210c, 210d), et

dans lequel la commande (221) est configurée pour obtenir les informations de module de chauffage à partir de la première mémoire (215a) lorsque le module de chauffage amovible (210a, 210b, 210c, 210d) est combiné au corps principal (220), déterminer une condition de commande correspondant au module de chauffage amovible (210a, 210b, 210c, 210d) en utilisant les informations de module de chauffage obtenues, et commander le dispositif de production d'aérosol (200) sur la base de la condition de commande déterminée,

dans lequel les informations de module de chauffage comportent un premier paramètre d'élément chauffant associé à des propriétés intrinsèques de l'élément chauffant (211),

la condition de commande inclut une tension ou un courant appliqué à l'élément chauffant (211), et

la commande (221) est en outre configurée pour déterminer la tension ou le courant appliqué à l'élément chauffant (211) sur la base d'une corrélation prédéterminée entre le premier paramètre d'élément chauffant et la tension ou le courant appliqué à l'élément chauffant (211),

dans lequel le premier paramètre d'élément chauffant représente une valeur de résistance de l'élément chauffant (211), une valeur d'inductance de l'élément chauffant (211) ou une valeur de fréquence de résonance de l'élément chauffant (211) obtenue pendant le processus de fabrication.

2. Dispositif de production d'aérosol (200, 400a, 400b, 500a, 500b) selon la revendication 1, dans lequel la condition de commande est une condition à laquelle l'élément chauffant (211) inclus dans le module de chauffage amovible (210a, 210b, 210c, 210d) exécute une opération de chauffage en fonction d'un profil de température prédéfini.

3. Dispositif de production d'aérosol (200, 400a, 400b, 500a, 500b) selon la revendication 1, dans lequel

l'élément chauffant (211) comporte une bobine (131) configurée pour générer un champ magnétique en fonction d'une tension ou d'un courant fourni par la batterie (223), et un suscepteur (132) configuré pour générer de la chaleur en fonction du champ magnétique,

la condition de commande inclut une fréquence d'une tension ou d'un courant appliqué à la bobine (131), et

la commande (221) est en outre configurée pour déterminer la fréquence de la tension ou du courant appliqué à la bobine (131), sur la base d'au moins un élément parmi une valeur d'inductance de l'élément chauffant (211), une valeur de résistance de l'élément chauffant (211) et une valeur de fréquence de résonance obtenue pendant le processus de fabrication, qui sont incluses dans le premier paramètre d'élément chauffant.

4. Dispositif de production d'aérosol (200, 400a, 400b, 500a, 500b) selon la revendication 1, dans lequel le corps principal (220) comporte en outre une seconde mémoire (229) stockant un second paramètre d'élément chauffant associé à une unité de circuit du corps principal (220) qui est électriquement connectée à l'élément chauffant (211) lorsque le corps principal (220) est combiné au module de chauffage amovible (210a, 210b, 210c, 210d), et

la commande (221) est en outre configurée pour déterminer la tension ou le courant appliqué à l'élément chauffant (211) en utilisant le second paramètre d'élément chauffant et le premier paramètre d'élément chauffant.

5. Dispositif de production d'aérosol (200, 400a, 400b, 500a, 500b) selon la revendication 1, dans lequel

le module de chauffage amovible (210a, 210b, 210c, 210d) comporte en outre un capteur de température (213) configuré pour mesurer une température de l'élément chauffant (211), les informations de module de chauffage comportent un paramètre de capteur de associé à des propriétés intrinsèques du capteur de température (213), et la commande (221) est en outre configurée pour déterminer une température d'étalonnage à utiliser pour commander le dispositif de production d'aérosol (200, 400a, 400b, 500a, 500b) en utilisant le paramètre du capteur de température et une valeur de mesure représentant la température de l'élément chauffant (211) mesurée par le capteur de température (213).

6. Dispositif de production d'aérosol (200, 400a, 400b, 500a, 500b) selon la revendication 5, dans lequel la commande (221) est en outre configurée pour calculer une valeur de compensation sur la base du paramètre de capteur de température, étalonner la valeur de mesure sur la base de la valeur de compensation, et déterminer la température d'étalonnage sur la base de la valeur de mesure étalonnée.

7. Dispositif de production d'aérosol (200, 400a, 400b, 500a, 500b) selon la revendication 5, dans lequel le paramètre de capteur de température est déterminé sur la base d'une vitesse de variation d'une température de l'élément chauffant (211) mesurée par le capteur de température (213) alors que l'élément chauffant (211) est chauffé pendant le processus de fabrication du module de chauffage amovible (210a, 210b, 210c, 210d).

8. Dispositif de production d'aérosol (200, 400a, 400b, 500a, 500b) selon la revendication 1, dans lequel

le module de chauffage amovible (210a, 210b, 210c, 210d) comporte en outre au moins une première borne de connexion (1210) configurée pour, lorsqu'elle est combinée au corps principal (220), former une connexion électrique (1231) entre l'élément chauffant (211) et la batterie (223) et une connexion électrique (1235) entre la commande (221) et la première mémoire (215a), et

le corps principal (220) comporte en outre au moins une seconde borne de connexion (1220) correspondant à la première borne de connexion (1210), et est configuré pour appliquer une tension ou un courant à l'élément chauffant (211) via la connexion électrique (1231) entre l'élément chauffant (211) et la batterie (223) et obtenir les informations de module de chauffage à partir de la première mémoire (215a) via la connexion électrique (1235) entre la commande (221) et la première mémoire (215a).

9. Dispositif de production d'aérosol (200, 400a, 400b, 500a, 500b) selon la revendication 8, dans lequel

la première borne de connexion (1210) est enfoncée ou fait saillie à partir d'une surface extérieure du module de chauffage amovible (210a, 210b, 210c, 210d), et la seconde borne de connexion (1220) fait saillie ou est enfoncée à partir d'une surface extérieure du corps principal (220) de manière à venir en contact avec la première borne de connexion (1210).

10. Dispositif de production d'aérosol (200, 400a, 400b, 500a, 500b) selon la revendication 1, dans lequel la commande (221) est en outre configurée pour, lorsque le module de chauffage amovible (210a, 210b, 210c, 210d) est remplacé par un nouveau module de chauffage amovible (210a, 210b, 210c, 200d), déterminer une nouvelle condition de commande en utilisant de nouvelles informations de module de chauffage obtenues à partir du nouveau module de chauffage amovible (210a, 400c, 500d), 500b) et commander le dispositif de production d'aérosol (200, 400a, 400b, 500a, 500b) sur la base de la nouvelle condition de commande de telle sorte que le dispositif de production d'aérosol (200, 400a, 400b, 500a, 500b) poursuit l'exécution d'une même opération de chauffage.

11. Dispositif de production d'aérosol (200, 400a, 400b, 500a, 500b) comportant :

un corps principal (220) comportant une commande (221) et une batterie (223) ; et un module de chauffage amovible (210a, 210b, 210c, 210d) combiné au corps principal (220) de manière amovible, comportant un élément chauffant (211) et un identifiant de module (215b), et configuré pour chauffer un article de production d'aérosol,

dans lequel l'identifiant de module (215b) est une image affichée sur une surface extérieure du module de chauffage amovible (210a, 210b, 210c, 210d), et comporte des informations de module de chauffage concernant des propriétés intrinsèques du module de chauffage amovible (210a, 210b, 210c, 210d), les informations de module de chauffage pouvant être lues par balayage, et

la commande (221) est configurée pour obtenir les informations de module de chauffage, déterminer une condition de commande correspondant au module de chauffage amovible (210a, 210b, 210c, 210d) en utilisant les informations de module de chauffage obtenues, et commander le dispositif de production d'aérosol (200, 400a, 400b, 500a, 500b) sur la base de la condition de commande déterminée,

dans lequel les informations de module de chauffage comportent un premier paramètre d'élément chauffant associé à des propriétés intrinsèques de l'élément chauffant (211), la condition de commande inclut une tension ou un courant appliqué à l'élément chauffant (211), et

la commande (221) est en outre configurée pour déterminer la tension ou le courant appliqué à l'élément chauffant (211) sur la base d'une corrélation prédéterminée entre le premier paramètre d'élément chauffant et la tension ou le courant appliqué à l'élément chauffant (211),

dans lequel le premier paramètre d'élément chauffant représente une valeur de résistance de l'élément chauffant (211), une valeur d'inductance de l'élément chauffant (211) ou une valeur de fréquence de résonance de l'élément chauffant (211) obtenue pendant le processus de fabrication.

12. Dispositif de production d'aérosol (200, 400a, 400b, 500a, 500b) selon la revendication 11, dans lequel

le corps principal (220) comporte en outre un élément de communication (225) configuré pour communiquer avec un dispositif électronique externe ayant une fonction de balayage de l'image, et

la commande (221) est en outre configurée pour obtenir les informations de module de chauffage à partir du dispositif électronique externe via l'élément de communication (225), les informations de module de chauffage étant obtenues en balayant l'image dans le dispositif électronique externe.

13. Procédé de fonctionnement d'un dispositif de production d'aérosol (200, 400a, 400b, 500a, 500b) selon les revendications 1 et 11, le procédé de fonctionnement comportant les étapes consistant à :

obtenir, à partir du module de chauffage amovible (210a, 210b, 210c, 210d) combiné au corps principal (220) de manière amovible, des informations de module de chauffage concernant des propriétés intrinsèques du module de chauffage amovible (210a, 210b, 210c, 210d), les informations de module de chauffage étant obtenues pendant un processus de fabrication du module de chauffage amovible (210a, 210b, 210c, 210d) ;

déterminer la condition de commande correspondant au module de chauffage amovible (210a, 210b, 210c, 210d) en utilisant les informations de module de chauffage obtenues ; et commander le dispositif de production d'aérosol (200, 400a, 400b, 500a, 500b) sur la base de la condition de commande déterminée.

[Fig. 1A]

100

110    120

BATTERY    CONTROLLER

131  132

130

[Fig. 1B]

100

110    120    130

BATTERY    CONTROLLER

300

[Fig. 1C]

100

110    120    140    130

BATTERY    CONTROLLER    VAPORIZER

300

[Fig. 1D]

100

110    120    140

BATTERY    CONTROLLER    VAPORIZER

300

130

[Fig. 2]

```
                                                    ⟋ 200
                                                   ⩘
┌ ─ ─ ─ ─ ─ ─ ─ ─ ─ ─ ─ ─ ─ ─ ┐
│              ⟋ 210a          │              ⟋ 210b
│      ┌─────────────────┐     │      ┌─────────────────┐
│      │    REMOVABLE     │◄────┼─────►│    REMOVABLE     │
│      │  HEATER MODULE   │     │      │  HEATER MODULE   │
│      └─────────────────┘     │      └─────────────────┘
│              ┊  ⟋ 220        │              ⟋ 210c
│      ┌─────────────────┐     │      ┌─────────────────┐
│      │                 │◄────┼─────►│    REMOVABLE     │
│      │                 │     │      │  HEATER MODULE   │
│      │                 │     │      └─────────────────┘
│      │    MAIN BODY    │     │              ⟋ 210d
│      │                 │◄────┼─────►┌─────────────────┐
│      │                 │     │      │    REMOVABLE     │
│      │                 │     │      │  HEATER MODULE   │
│      └─────────────────┘     │      └─────────────────┘
└ ─ ─ ─ ─ ─ ─ ─ ─ ─ ─ ─ ─ ─ ─ ┘
```

[Fig. 3]

```
                                                    ⟋ 200
                                                   ⩘
                                                   ⟋ 210
┌────────────────────────────────────────────────────────┐
│    ⟋ 211              ⟋ 213              ⟋ 215a         │
│ ┌──────────┐   ┌─────────────────┐   ┌───────────┐      │
│ │  HEATER  │   │   TEMPERATURE   │   │   SUB-    │      │
│ │          │   │     SENSOR      │   │  MEMORY   │      │
│ └──────────┘   └─────────────────┘   └───────────┘      │
│     │                  │                   │            │
└─────┼──────────────────┼───────────────────┼───────────┘
      │                  │                   │     ⟋ 220
┌─────┼──────────────────┼───────────────────┼───────────┐
│     │                  │    ⟋ 221          │            │
│     │             ┌─────────────┐          │            │
│     │             │ CONTROLLER  │          │            │
│     │             └─────────────┘          │            │
│     │                  │                   │            │
│  ┌──┴───┬──────┬───────┴────┬──────────────┘            │
│ ⟋223  ⟋225         ⟋227          ⟋229                  │
│ ┌────────┐ ┌────────────┐ ┌──────────┐ ┌──────────┐     │
│ │BATTERY │ │COMMUNICATOR│ │  USER    │ │  MAIN    │     │
│ │        │ │            │ │INTERFACE │ │ MEMORY   │     │
│ └────────┘ └────────────┘ └──────────┘ └──────────┘     │
└────────────────────────────────────────────────────────┘
```

[Fig. 4A]

400a

210a

211a — HEATER

- RESISTANCE VALUE OF HEATER R1
- INDUCTANCE VALUE OF HEATER L1

220

221 — CONTROLLER

- VOLTAGE APPLIED TO HEATER V1

400b

210b

211b — HEATER

- RESISTANCE VALUE OF HEATER R2
- INDUCTANCE VALUE OF HEATER L2

220

221 — CONTROLLER

VOLTAGE APPLIED TO HEATER V1

↓

VOLTAGE APPLIED TO HEATER V2

[Fig. 4B]

TEMPERATURE (°C)

410

430

350

300

250

200

150

100

T

TIME (SECONDS)

[Fig. 5A]

500a

210a

211a — HEATER 210a — RESISTANCE VALUE OF HEATER R3

220

221 — CONTROLLER — VOLTAGE APPLIED TO HEATER V3

500b

210b

211b — HEATER — RESISTANCE VALUE OF HEATER R4

220

221 — CONTROLLER

VOLTAGE APPLIED TO HEATER V3

↓

VOLTAGE APPLIED TO HEATER V4

[Fig. 5B]

[Fig. 6]

[Fig. 7]

[Fig. 8]

[Fig. 9]

EP 4 225 089 B1

29

[Fig. 10]

TEMPERATURE
(°C)

TIME (SECONDS)

------·---- TEMPERATURE WITH
            COMPENSATION VALUE ADDED

——————— ACTUAL TEMPERATURE OF HEATER

[Fig. 11]

[Fig. 12]

[Fig. 13]

[Fig. 14]

| REMOVABLE HEATER MODULE /210 | MAIN BODY /220 | EXTERNAL ELECTRONIC DEVICE /230 |

OBTAIN HEATER MODULE INFORMATION BY SCANNING MODULE IDENTIFIER
1401

OBTAIN HEATER MODULE INFORMATION
1402

1403
CONTROL AEROSOL GENERATING DEVICE BY USING HEATER MODULE INFORMATION

[Fig. 15]

START

OBTAIN HEATER MODULE INFORMATION ABOUT INTRINSIC PROPERTIES OF REMOVABLE HEATER MODULE OBTAINED DURING MANUFACTURING PROCESS OF REMOVABLE HEATER MODULE FROM REMOVABLE HEATER MODULE — 1501

DETERMINE CONTROL CONDITION CORRESPONDING TO REMOVABLE HEATER MODULE BY USING OBTAINED HEATER MODULE INFORMATION — 1502

CONTROL AEROSOL GENERATING DEVICE BASED ON DETERMINED CONTROL CONDITION — 1503

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017143042 A1
- WO 2018202727 A1
- US 2018093054 A1
- WO 2020122408 A1